# EUROPÄISCHE PATENTSCHRIFT

(11) **EP 2 134 798 B1**
(45) Veröffentlichungstag und Bekanntmachung des Hinweises auf die Patenterteilung: **07.08.2019**
(21) Anmeldenummer: 08707174.2
(22) Anmeldetag: 22.01.2008
(51) Int. Cl.: C09D 183/04, C08G 18/61

(54) **BESCHICHTUNGSMITTEL ENTHALTEND ADDUKTE MIT SILANFUNKTIONALITÄT UND DARAUS HERGESTELLTE HOCHKRATZFESTE BESCHICHTUNGEN MIT VERBESSERTER RISSBESTÄNDIGKEIT**
COATING AGENT CONTAINING ADDITION COMPOUNDS WITH SILANE FUNCTIONALITY AND HIGHLY SCRATCH-RESISTANT COATINGS WITH IMPROVED CRACK RESISTANCE
AGENTS DE REVÊTEMENT COMPORTANT DES PRODUITS D'ADDITION À FONCTIONNALITÉ SILANE ET REVÊTEMENTS RÉSISTANTS AUX RAYURES PRODUITS AU MOYEN DE CES AGENTS DE REVÊTEMENT ET PRÉSENTANT UNE MEILLEURE RÉSISTANCE AUX CRAQUELURES

(30) Priorität: 15.03.2007 DE 102007013262
(43) Veröffentlichungstag der Anmeldung: 23.12.2009
(73) Patentinhaber: BASF Coatings GmbH, 48165 Münster (DE)
(72) Erfinder: POPPE, Andreas, 48324 Sendenhorst (DE); WEGNER, Egon, 48268 Greven (DE); KLEIN, Günter, 48165 Münster (DE)
(74) Vertreter: BASF IP Association
(86) Internationale Anmeldenummer: PCT/EP2008/000441
(87) Internationale Veröffentlichungsnummer: WO 2008/110229

(56) Entgegenhaltungen:
- EP-A- 0 480 089
- DE-A1-102004 050 748

## Beschreibung

### Gebiet der Erfindung

Die vorliegende Erfindung betrifft Beschichtungsmittel enthaltend
(i) mindestens ein Addukt (A) mit Silanfunktionalität,
(ii) mindestens einen Katalysator (C) für die Vernetzung der Silangruppen,
(iii) mindestens ein von dem Addukt (A) verschiedenes, filmbildendes Material (D) mit mindestens einer reaktiven, funktionellen Gruppe G'" und
(iv) ein oder mehrere aprotische Lösemittel (L), gemäß Anspruch 1 der Anmeldung.

### Stand der Technik

Aus der DE 10 2004 050 747 A1 und DE 10 2005 045228 sind Beschichtungsmittel der eingangs genannten Art bekannt, die Addukte mit Alkoxysilanfunktionalität enthalten. Die dort beschriebenen Beschichtungsmittel werden unter Verwendung geeigneter Katalysatoren unter Ausbildung von Si-O-Si-Netzwerken ausgehärtet. Die Beschichtungsmittel werden unter anderem als Klarlacke in OEM-Aufbauten eingesetzt. Sie führen zu Beschichtungen mit einer sehr hohen Kratzfestigkeit, sind jedoch häufig hinsichtlich der Witterungsstabilität und bezüglich der Rissbildung, insbesondere bei höheren Schichtdicken von mehr als 40 *µ*m, weiter zu verbessern. Nachteilig ist außerdem der recht hohe Preis der in diesen Beschichtungsmitteln in recht hohen Mengen enthaltenen Addukte mit Alkoxysilanfunktionalität.

Weiterhin ist es aus der US 2006-0217472 A1 bekannt, dass die Kratzfestigkeit von Beschichtungen auf Basis von Polyurethanen verbessert werden kann, wenn man zu Beschichtungsmitteln, die ein hydroxylgruppenhaltiges Bindemittel, einen isocyanatgruppenhaltigen Vernetzer und einen Metallkatalysator für die OH/NCO-Reaktion enthalten, ein Aminosilan, wie z.B. Bis(3-propyltrimethoxysilyl)amin, oder dessen Umsetzungsprodukte mit Isocyanaten zusetzt. Eine Modifizierung der Aminosilane mit oberflächenaktiven Komponenten ist in der US 2006-0217472 A1 jedoch nicht beschrieben.

Ferner sind in der noch nicht veröffentlichen amerikanischen Patentanmeldung mit der Serial Number 11/227,867 vom 15. September 2005 Beschichtungsmittel beschrieben, die Umsetzungsprodukte (I) eines Dimerfettsäurediols mit einem Isocyanatoalkyltrialkoxysilan enthalten.

Die unter Verwendung dieser Beschichtungsmittel erhaltenen Beschichtungen zeichnen sich insbesondere durch einen sehr hohen Glanz aus. Mit zunehmendem Anteil der Beschichtungsmittel an den Umsetzungsprodukten (I) aus dem Dimerfettsäurediol mit dem Isocyanatoalkyltrialkoxysilan nimmt die Härte und die Beständigkeit gegenüber Lösemittel, gemessen in Doppelhüben Methylethylketon, ab. Im Bereich der Automobillackierung werden jedoch zunehmend Beschichtungen mit einer verbesserten Härte und Beständigkeit und somit einer verbesserten Kratzfestigkeit gefordert.

Aus der WO01/98393 sind Beschichtungsmittel mit einer verbesserten Haftung auf Aluminiumsubstraten bekannt, die neben einem Hydroxylgruppen enthaltenden Bindemittel und einem Isocyanatgruppen enthaltenden Vernetzer ein Silan-Oligomer (B) mit mindestens zwei Isocyanatgruppen als wesentlichen Bestandteil enthalten, wobei dieses Oligomer (B) das Umsetzungsprodukt einer Isocyanatfunktionellen Verbindung (A) mit einem Kupplungsreagenz (X) ist, welches mindestens eine alkoxysilanfunktionelle Gruppe und mindestens eine gegenüber Isocyanatgruppen reaktive Gruppe enthält. Eine Modifizierung der Silan-Oligomere (B) mit oberflächenaktiven Komponenten ist in der WO01/98393 ebenfalls nicht beschrieben. In dieser Anmeldung wird die bekannte Eigenschaft der Silane, besonders starke Bindungen mit Aluminium einzugehen, ausgenutzt. Um eine besonders gute Haftung zu erreichen, ist es sogar von Vorteil, wenn sich die eingesetzten Silane eher an der Grenzfläche zum Substrat anreichern. Zusätzlich fehlt bei den dort beschriebenen Beschichtungsmitteln noch der Zusatz eines Katalysators für die Vernetzung der Silangruppen.

Weiterhin sind aus der WO 01/09260 Beschichtungsmittel bekannt, die Polysiloxane (a) mit mindestens einer reaktiven Gruppe, Verbindungen (b), die mindestens eine, mit den reaktiven Gruppen der Polysiloxane reaktionsfähige Gruppe aufweisen, sowie ggf. Partikel (c) und weitere Bestandteile enthalten. Somit bilden die Polysiloxane bei der Aushärtereaktion mit den Verbindungen (b) nicht ein Si-O-Si-Netzwerk aus.

Die EP-B-1 204 701 beschreibt Beschichtungsmittel, die neben Nanoteilchen eine oberflächenaktive Substanz enthalten, wodurch es in der Beschichtung zu einer Anreicherung der Nanoteilchen an der Oberfläche kommt, was zu einer verbesserten Kratzfestigkeit der Beschichtungen führt. Derartige Strukturen weisen meist nur eine geringe Ausdehnung auf, ähnlich wie eine Perlenkette an der Oberfläche.

Aufgrund der extrem starken interpartikulären Wechselwirkungen und der meist nicht vollständigen Stabilisierung der Partikel kommt es jedoch häufig zu Agglomeration von Partikeln und somit zu einer negativen Beeinflussung des Verlaufs und des Appearance der resultierenden Beschichtungen. Des weiteren ist eine extrem gute Stabilisierung der Partikel notwendig, um ein breites Verarbeitungsfenster zu gewährleisten und mögliche Ablagerungen in den Ringleitungen zu vermeiden.

Außerdem sind aus der WO05/028550 funktionale Polymere bekannt, die durch Behandlung von Bulk-Polymeren mit einem oberflächenmodifizierenden Additiv (kurz "SMA" genannt) hergestellt werden. Diese oberflächenmodifizierenden Additive stellen Polymere mit einem funktionalen Block dar, welcher ein oberflächenaktives Segment aufweist. Diese modifizierten Polymere werden mit den unmodifizierten Bulk-Polymeren gemischt und die so erhaltenen Mischungen werden zur Herstellung von Formteilen oder ähnlichen Artikeln oder von Beschichtungen eingesetzt, um gezielt die Eigenschaften der Oberflächen der erhaltenen Artikel bzw. Beschichtungen zu steuern. Die oberflächenaktive Modifizierung von einzelnen Bestandteilen eines Beschichtungsmittels, das erst anschließend zu einer Beschichtung mit gezielten Oberflächeneigenschaften vernetzt wird, ist in der WO05/028550 jedoch nicht beschrieben. Außerdem werden die in der WO05/028550 beschriebenen Polymeren für biologische bzw. medizinische Anwendungen, beispielsweise für Kosmetika, für die biozide Ausrüstung von Handschuhen, Kleidung, medizinischen Geräten u.ä. oder für die biozide Ausrüstung von Luftfiltern u.ä. sowie für die Herstellung von diagnostischen Chips durch eine bioaktive Oberflächenausrüstung der Chips, eingesetzt.

Zwar werden u.a. auch alkoxysilanfunktionelle, oberflächenaktive Formteile und Beschichtungen beschrieben, bei denen die Bulk-Polymeren teilweise mit polymeren Additiven behandelt werden, die Alkoxysilangruppen aufweisen. Die Härtung der Alkoxysilangruppen erfolgt dabei durch eine mehrstündige Feuchtigkeitsbehandlung oder durch Behandeln mit wässrigen Säuren. Diese im Bereich der Kunststoffteile übliche Behandlung ist jedoch im Bereich der Automobillackierung mit einem erheblichen Zusatzaufwand verbunden und daher nicht erwünscht. Außerdem sind im Bereich der Automobillackierung üblicherweise eingesetzte Klarlacke im Allgemeinen unverträglich mit den erforderlichen wässrigen Säuren, so dass eine Übertragung der in der WO05/028550 beschriebenen funktionalen Beschichtungen auf den Bereich der Automobillackierung nicht möglich ist.

DE 10 2004 050748 A1 offenbart ein Beschichtungsmittel enthaltend ein Addukt mit Silanfunktionalität, einen Katalysator, ein filmbildendes Material und ein aprotisches Lösemittel.

Schließlich sind aus der EP-B-1 295 914 Beschichtungsmittel mit einem verbesserten Öl- und Wasser-abstoßenden Effekt bekannt, die ein Alkoxysilylgruppen enthaltendes Acrylharz, ein Acrylharz, enthaltend Alkoxysilylgruppen und Dimethylpolysiloxan-Nebenketten, ein Hydroxyl- und Epoxygruppen enthaltendes Acrylharz sowie ein Polyesterharz mit hoher Säurezahl enthalten. Bei der Aushärtung der Beschichtungsmittel können sich in Konkurrenz zu den erwünschten Si-O-Si-Netzpunkten durch Reaktion der -Si(O-Alkyl)3-Gruppen mit den Hydroxylgruppen der Alkyl(meth)acrylatharze unerwünschte Si-O-C-Netzpunkte bilden, welche hydrolyselabil sind und zu einer reduzierten Chemikalienbeständigkeit der resultierenden Beschichtung führen. Da die hoch beanspruchbaren OEM-Klarlacke eine möglichst hohe Witterungsbeständigkeit aufweisen sollen, ist es von Belang, dass die Poly(meth)-acrylat-Netzwerke im Vergleich zu Polyurethannetzwerken eine reduzierte Witterungsbeständigkeit aufweisen.

Weiterhin ist bei - via freier radikalischer Polymerisation hergestellten - Acrylatbindemitteln ganz allgemein aufgrund der relativ breiten Molekulargewichtsverteilung die Möglichkeit zur Formulierung von 1 K Klarlacken mit deutlich höheren Festkörpergehalten als 50 Gew.- % nur mit großem Aufwand realisierbar. Bei höheren Anteilen sind die Lacke aufgrund ihrer hohen Viskosität nur noch schwer verarbeitbar.

### Aufgabe

Der vorliegenden Erfindung lag daher die Aufgabe zugrunde, Beschichtungsmittel zur Verfügung zu stellen, die zu Beschichtungen mit einer hohen Mikroeindringhärte und einer sehr guten Trockenkratzfestigkeit, üblicherweise bestimmt im Crockmeter-Test, führen. Weiterhin war es Aufgabe der Erfindung, Beschichtungsmittel zur Verfügung zu stellen, die zu einem hochgradig witterungsstabilen und rissbeständigen Netzwerk führen. Vorteilhafterweise sollte das Netzwerk außerdem in hohem Maße über Polyurethan- und/oder Polyharnstoff-Einheiten verfügen, wobei die unerwünschte Ausbildung von Si-O-C- und von Si-N-C-Netzpunkten weitestgehend unterdrückt wird. Ferner sollten die Beschichtungsmittel die üblicherweise im Bereich der Automobilserienlackierung gestellten Anforderungen erfüllen. Die Beschichtungsmittel sollen daher insbesondere auch einen guten Haze, d.h. keinen Glanzschleier, einen guten Verlauf sowie einen sehr guten optischen Gesamteindruck (Appearance) aufweisen. Schließlich sollten die gewünschten Eigenschaften möglichst kostengünstig erhalten werden.

### Lösung der Aufgabe

Diese Aufgabe wird überraschenderweise durch Beschichtungsmittel der eingangs genannten Art gelöst, die dadurch gekennzeichnet sind, dass das Addukt (A) herstellbar ist durch eine Additionsreaktion von
(a) mindestens einem Silan (S1), das mindestens eine funktionelle Gruppe G' aufweist, die mit den komplementären funktionellen Gruppen G" der Verbindung (O) reaktiv ist, und das Silan (S1) zusätzlich mindestens eine hydrolysierbare Gruppe aufweist, und
(b) mindestens einer Verbindung (O), die mindestens eine komplementäre funktionelle Gruppe G" und mindestens einen oberflächenaktiven Rest aufweist, wobei der oberflächenaktive Rest ausgewählt ist aus der Gruppe der Kohlenwasserstoffreste, der fluorierten Kohlenwasserstoffreste, der Fettsäurereste und der ggf. substituierten Siloxanreste; wobei die Verbindung (O) eine um mindestens 1 mN/m geringere Oberflächenspannung als das Silan (S1) aufweist, und die Oberflächenspannung bei 23 °C mittels eines Ring-Tensiometers gemessen wird.

Gegenstand der Erfindung sind außerdem effekt- und/oder farbgebende Mehrschichtlackierungen, bei denen die transparente Beschichtung aus den erfindungsgemäßen Beschichtungsmitteln hergestellt worden ist, sowie Verfahren zur Herstellung dieser Mehrschichtlackierung und deren Verwendung, und wie in dem Anspruch 18 beschrieben ist.

Schließlich betrifft die Erfindung noch ein Verfahren zur Verbesserung der Härte und der Kratzfestigkeit einer Beschichtung, insbesondere einer Mehrschichtlackierung, das dadurch gekennzeichnet ist, dass den zur Herstellung der zu verbessernden Beschichtung verwendeten Beschichtungsmitteln das Addukt (A) mit Silanfunktionalität, welches zumindest zum Teil oberflächenaktive Reste aufweist, in Kombination mit einem geeigneten Katalysator (C) zugesetzt wird, und wie in dem Anspruch 20 beschrieben ist.

### Vorteile der Erfindung

Es ist überraschend und war nicht vorhersehbar, dass durch Zusatz der erfindungsgemäßen, mindestens zum Teil oberflächenaktive Reste aufweisenden Addukte (A) mit Silanfunktionalität in Kombination mit geeigneten Katalysatoren zu herkömmlichen Beschichtungsmitteln die Kratzfestigkeit und die Mikroeindringhärte der resultierenden Beschichtungen sehr stark erhöht wird, gleichzeitig aber die entsprechenden Vorteile der jeweils modifizierten herkömmlichen Beschichtungsmittel erhalten bleiben. Erfindungsgemäß werden also überraschenderweise Beschichtungsmittel erhalten, die zu hochkratzfesten Beschichtungen mit einer hohen Mikroeindringhärte bei einer gleichzeitig sehr guten Witterungsstabilität und Rissbeständigkeit auch bei Schichtdicken > 40*µ*m führen. Außerdem erfüllen die Beschichtungsmittel die üblicherweise im Bereich der Automobilserienlackierung gestellten Anforderungen. Die Beschichtungsmittel weisen daher insbesondere auch einen guten Haze, d.h. keinen Glanzschleier, einen guten Verlauf sowie einen sehr guten optischen Gesamteindruck (Appearance) auf.

Die erfindungsgemäß eingesetzten Addukte (A) können dabei besonders einfach und sehr gut reproduzierbar hergestellt werden und insbesondere die bevorzugt eingesetzten Addukte (II) bereiten bei der Lackapplikation keine signifikanten toxikologischen und ökologischen Probleme.

Des weiteren reicht bereits die Zugabe geringer Menge der Addukte (A) und der zugehörigen Katalysatoren C aus, um die gewünschte Eigenschaftsverbesserung zu erhalten. Dies ist insbesondere vor dem Hintergrund, dass die silanhaltigen Addukte vergleichsweise hochpreisige Rohstoffe darstellen, von Bedeutung.

### Ausführliche Beschreibung der Erfindung

### Addukt (A) mit Silanfunktionalität

Die erfindungsgemäß eingesetzten Addukte (A) mit Silanfunktionalität sind herstellbar durch eine Additionsreaktion von
(a) mindestens einem Silan (S1), das mindestens eine funktionelle Gruppe G' aufweist, die mit den komplementären funktionellen Gruppen G" der Verbindung (O) reaktiv ist, und das Silan (S1) zusätzlich mindestens eine hydrolysierbare Gruppe aufweist, und
(b) mindestens einer Verbindung (O), die mindestens eine komplementäre funktionelle Gruppe G" und mindestens einen oberflächenaktiven Rest aufweist, wobei der oberflächenaktive Rest ausgewählt ist aus der Gruppe der Kohlenwasserstoffreste, der fluorierten Kohlenwasserstoffreste, der Fettsäurereste und der ggf. substituierten Siloxanreste; wobei die Verbindung (O) eine um mindestens 1 mN/m geringere Oberflächenspannung als das Silan (S1) aufweist, und die Oberflächenspannung bei 23 °C mittels eines Ring-Tensiometers gemessen wird.

Unter Additionsreaktion werden nukleophile, elektrophile, pericyclische oder metallkatalysierte Additionsreaktionen verstanden, wie sie u. a. auch mechanistisch in den Lehrbüchern der organischen Chemie, beispielweise Organikum, "Reaktionsmechanismen in der Organischen Chemie", Peter Sykes,VCH - Verlag, im Detail beschrieben sind.

Die Additionsreaktionen zur Herstellung der Addukte (A) mit Silanfunktionalität werden dabei insbesondere zur Umsetzung des Silans (S1) mit der Verbindung (O) eingesetzt. Es ist aber zusätzlich auch möglich, zunächst die Silane (S1) durch eine entsprechende Additionsreaktion aufzubauen und erst dann die Umsetzung mit der Verbindung (O) durchzuführen. Bevorzugt ist es, die Silane (S1) in situ durch eine entsprechende Addition aufzubauen, während gleichzeitig die Umsetzung mit der Verbindung (O) durchgeführt wird.

Die funktionellen Gruppen G' der Silane (S1) und/oder die funktionellen Gruppen G" der Verbindung (O) sind bevorzugt ausgewählt aus der Gruppe der Hydroxyl-, Epoxy-, Isocyanat-, Carbamat-, Carboxyl-, Anhydrid-, Amin- und/oder Thiolgruppen und/oder der ethylenisch ungesättigten Doppelbindungen.

Außerdem ist es bevorzugt, dass die funktionellen Gruppen G' und G" nicht beide gleichzeitig ethylenisch ungesättigte Doppelbindungen sind, sondern nur G' oder G" eine ethylenisch ungesättigte Doppelbindung ist.

Außerdem werden in den erfindungsgemäßen Beschichtungsmitteln bevorzugt Addukte (A) eingesetzt, die im Mittel weniger als 50 mol- % von den Silangruppen, insbesondere von den Alkoxysilangruppen, verschiedene, freie reaktive Gruppen und bevorzugt keine von den Silangruppen, insbesondere von den Alkoxysilangruppen, verschiedene, freie reaktive Gruppen aufweisen.

Beispiele für geeignete Additionsreaktionen zur Herstellung der Addukte (A) mit Silanfunktionalität sind daher insbesondere
(I) Reaktionen von Isocyanatgruppen mit Hydroxylgruppen, von Isocyanatgruppen mit Aminogruppen und von Isocyanatgruppen mit Thiolgruppen,
(II) Reaktionen von Epoxygruppen mit Carboxylgruppen und von Epoxygruppen mit Anhydridgruppen,
(III) Reaktionen von Verbindungen mit aktiven Wasserstoffatomen an ethylenisch ungesättigte Doppelbindungen (sogenannte Michael Additionen), insbesondere Additionen von Aminogruppen an ethylenisch ungesättigte Doppelbindungen
   und
(IV) Metallkatalysierte Addionsreaktionen.

Als Beispiele für Reaktionen der Gruppe (I) seien folgende
Umsetzungen genannt:
- Additionen von Isocyanat - funktionellen Verbindungen an Aminosilane,
- Additionen von Isocyanat - funktionellen Verbindungen an Thiol - funktionelle Silane.
- Additionen von Isocyanatosilanen an Hydroxy - funktionelle Verbindungen,
- Additionen von Isocyanatosilanen an Amino - funktionelle Verbindungen und
- Additionen von Isocyanatosilanen an Thiol - funktionelle Verbindungen.

Erfindungsgemäß bevorzugt wird die Nukleophile Addition von Amin - funktionellen Silanen oder Thiol - funktionellen Silanen an Isocyanatfunktionelle Oligomere.

Hier und im Folgenden wird dabei unter einem Oligomer eine Verbindung verstanden, welche im Allgemeinen im Mittel 2 bis 10 Grundstrukturen oder Monomereinheiten aufweist. Unter einem Polymeren wird dagegen eine Verbindung verstanden, welche im Allgemeinen im Mittel mehr als 10 Grundstrukturen oder Monomereinheiten aufweist.

Als Beispiele für Reaktionen der Gruppe (II) seien folgende Umsetzungen genannt:
- Additionen von Epoxy - funktionellen Silanen an Carboxy - funktionelle Verbindungen,
- Additionen von Epoxy - funktionellen Silanen an Anhydrid - funktionelle Verbindungen und
- Additionen von Anhydrid - funktionellen Silanen an Epoxy - funktionelle Verbindungen.

Eine ausführliche Beschreibung der Additionsreaktion von Anhydrid - funktionellen Silanen mit Epoxy - funktionellen Verbindungen findet sich in der WO 2006/097387.

Als Beispiele für Reaktionen der Gruppe (III) seien folgende Umsetzungen genannt:
- Additionen von Aminosilanen an Alpha, Beta ungesättige Verbindungen, z. B. Acryloyl - und Methacryloyl - funktionelle Verbindungen, wie Di(meth)acrylate, u.ä.

Beispielhaft für die Gruppe (IV) der metallkatalysierten Additionsreaktionen sei hier die Hydrosylilierungsreaktion genannt. Im Rahmen einer solchen Hydrosilylierungsreaktion können beispielsweise Silane mit Si-H - Funktionalität an (Poly)Olefine oder an C=C Doppelbindungen enthaltende Siloxane, wie z. B. Diphenylsiloxan-dimethylsiloxan - Vinyl - terminiertes Copolymer, welches kommerziell bei der ABCR GmbH & Co. KG unter der Artikelnummer AB 116641 erhältlich ist, umgesetzt werden.

Aber auch andere metallkatalysierte Additionsreaktionen, insbesondere Kupplungsreaktionen, können zum Einsatz kommen.

Ganz allgemein können als Silane (S1) Verbindungen mit Si-H Gruppen eingesetzt werden. Diese können im Rahmen einer Hydrosilylierungsreaktion mit den Verbindungen (O) umgesetzt werden.

Beispielhaft für derartige Silane (S1) mit Si-H Gruppen seien Trichlorsilan, Methyldichlorsilan und Dimethylchlorsilan genannt.

Derartige Verbindungen können mit ungesättigten Verbindungen wie z.B. verschiedenen 1,2 Oligo- oder Polybutadienen oder mit Doppelbindungen enthaltenden Siloxanen, wie z. B. unter Platinkatalyse, zu den entsprechenden Silan - funktionellen Harzen umgesetzt werden. Ggf. können diese Silane (S1) mit Si-H Gruppen im Rahmen einer Umsetzung mit geeigneten Alkoholen, wie z. B. Methanol, zu den entsprechenden Alkoxysilanen umgesetzt werden.

Neben den Silanen mit Si-H - Bindung werden besonders bevorzugt organofunktionelle Silane (S1) eingesetzt. Als organofunktionelle Silane können sowohl Silane mit einem, mit zwei oder mit drei oder mehr hydrolysierbaren Gruppen eingesetzt werden. Hinsichtlich der Verträglichkeit und der Reaktivität der Silane werden jedoch Silane mit mindestens 3 hydrolysierbaren Gruppen bevorzugt eingesetzt.

Ganz allgemein können die erfindungsgemäß bevorzugten organofunktionellen Silane (S1) durch die Strukturformel (I)

R^{S}ₙ-Si-R"ₓX₄₋₍ₙ₊ₓ₎ (I)

dargestellt werden.

Die Gruppen X, welche identisch oder unterschiedlich sein können, stellen dabei hydrolysierbare Gruppen dar.

Die Gruppen R^{s} stellen organische Reste mit mindestens einer funktionellen Gruppe dar, insbesondere lineare und/oder verzweigte Alkylen- oder Cycloalkylenreste mit 1 bis 20 Kohlenstoffatomen und mit mindestens einer funktionellen Gruppe G', ganz besonders Alkylenreste mit 1 bis 4 Kohlenstoffatomen und mit mindestens einer funktionellen Gruppe G',

R" ist Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen.

In der Strukturformel ist n = 1 bis 3, bevorzugt 1 bis 2, besonders bevorzugt n = 1, x = 0 bis 2, bevorzugt 0 bis 1, besonders bevorzugt x = 0 und 1≤n+x≤3, bevorzugt 1≤n+x≤2, besonders bevorzugt n+x = 1.

Die hydrolysierbaren Gruppen X können ausgewählt werden aus der Gruppe der Halogene, insbesondere Chlor und Brom, aus der Gruppe der Alkoxygruppen, aus der Gruppe der Alkylcarbonylgruppen und aus der Gruppe der Acyloxygruppen. Besonders bevorzugt sind Alkoxygruppen.

Die besonders bevorzugt eingesetzten Alkoxysilane können daher durch die Formel (II)

R^{S}ₙ-Si-R"ₓ(OR)₄₋₍ₙ₊ₓ₎ (II)

dargestellt werden, wobei
n = 1 bis 3, bevorzugt n = 1 bis 2 und besonders bevorzugt n = 1,
x = 0 bis 2, bevorzugt 0 bis 1, besonders bevorzugt x = 0,
1≤n+x≤3, bevorzugt 1≤n+x≤2, besonders bevorzugt n+x = 1,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
R^{S} = organischer Rest mit mindestens einer funktionellen Gruppe G',, insbesondere lineare und/oder verzweigte Alkylen- oder Cycloalkylenreste mit 1 bis 20 Kohlenstoffatomen und mit mindestens einer funktionellen Gruppe G', ganz besonders Alkylenreste mit 1 bis 4 Kohlenstoffatomen und mit mindestens einer funktionellen Gruppe G',
   und
R = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R = Alkylrest, insbesondere mit 1 bis 6 C-Atomen,
   bedeuten.

Die jeweiligen bevorzugten Alkoxyreste können gleich oder verschieden sein, entscheidend für den Aufbau der Reste ist jedoch, inwiefern diese die Reaktivität der hydrolysierbaren Silangruppen beeinflussen. Bevorzugt ist R ein Alkylrest, insbesondere mit 1 bis 6 C-Atomen. Besonders bevorzugt sind Reste R, die die Reaktivität der Silangruppen erhöhen, d.h. gute Abgangsgruppen darstellen. Insofern ist ein Methoxy - Rest gegenüber einem Ethoxy - Rest und dieser wiederum gegenüber einem Propoxyrest bevorzugt. Besonders bevorzugt ist daher R = Ethyl und/- oder Methyl, insbesondere Methyl. Ganz allgemein können jedoch auch weniger reaktive Silane als (S1) eingesetzt werden. In derartigen Fällen muss eine ausreichende Vernetzungsdichte entweder durch einen entsprechend effizienteren Katalysator erreicht werden, oder es muss eine entsprechend höhere Menge an Katalysator zugesetzt werden.

Auch nicht funktionelle Substituenten am organofunktionellen Silan (S1), insbesondere Subsituenten am Rest R^{s}, können dessen Reaktivität beeinflussen. Beispielhaft sei dies erläutert am Beispiel von voluminösen, sperrigen Substituenten an der Aminfunktion, die die Reaktivität von Aminfunktionellen Silanen reduzieren können. Vor diesem Hintergrund ist N-(n-butyl)-3-aminopropyltrimethoxysilan bevorzugt vor N-Cyclohexyl-3-aminopropyltrimethoxysilan.

Ganz allgemein sind die Reste R^{s}, die die Reaktivität der Silane erhöhen, bevorzugt gegenüber Resten, die die Reaktivität der Silane herabsetzen.

Des weiteren kann die Reaktivität von organofunktionellen Silanen auch durch die Länge der Spacer zwischen Silan - Funktionalität und organischer funktioneller Gruppe G' erheblich beeinflusst werden. Beispielhaft dafür seien die "alpha" - Silane genannt, die bei der Firma Wacker erhältlich sind, und bei denen eine Methylengruppe anstelle der bei "gamma"-Silane vorhandenen Propylengruppe zwischen Si-Atom und funktioneller Gruppe ist. Zur Verdeutlichung wird angeführt, dass Methacryloxymethyltrimethoxysilan ("alpha" - Silan, z.B. Handelsprodukt GENIOSIL® XL 33 der Firma Wacker) bevorzugt gegenüber Methacryloxypropyltrimethoxysilan ("gamma" - Silan, z.B. Handelsprodukt GENIOSIL® GF 31 der Firma Wacker) eingesetzt wird, um die erfindungsgemäßen Addukte (A) zu synthetisieren.

Ganz allgemein sind Spacer, die die Reaktivität der Silane erhöhen, bevorzugt gegenüber Spacern, die die Reaktivität der Silane herabsetzen.

Um eine möglichst hohe Vernetzungsdichte durch eine Silan - Vernetzung zu erreichen, ist es vorteilhaft, möglichst viele Silan - Gruppen in Relation zum Molekulargewicht des einzusetzenden Adduktes zu realisieren. Wenn dies gewährleistet ist und eine besonders hohe Netzwerkdichte im festen Film resultiert, können besonders gute Eigenschaften unter anderem hinsichtlich der Kratzfestigkeit erreicht werden. Vor diesem Hintergrund sind solche organofunktionellen Silane ganz besonders bevorzugt, die es erlauben, quasi ohne nennenswerten Molekulargewichtsaufbau eine besonders hohe Funktionalität im Harz zu realisieren.

Beispielhaft sei dies am Beispiel von zwei Amino - funktionellen Silanen gezeigt: Bis (3-trimethoxysilylpropyl)amin ist bevorzugt vor N-(n-butyl)-3-aminopropyltrimethoxysilan.

Die reaktiven Gruppen G' der Silane (S1) sind bevorzugt ausgewählt aus der Gruppe der Amin-, Epoxy-, Anhydrid-, Isocyanat-, Carbamat- und/oder Thiolgruppen und/oder der ethylenisch ungesättigten Doppelbindungen.

Beispielhaft - aber nicht limitierend - werden im folgenden erfindungsgemäß bevorzugte organofunktionelle Silane aufgezählt, die besonders geeignet für die Herstellung der Addukte (A) sind:

### 1) Amin- und Thiol - funktionelle Silane

Zum Einsatz, insbesondere im Rahmen von Michael - Additionen, kommen beispielsweise primäre Aminosilane, wie 3 - Aminopropyltriethoxysilan (erhältlich z.B. unter dem Markennamen Geniosil® GF 93 von der Fa. Wacker Chemie), 3 - Aminopropyltrimethoxysilan (erhältlich z.B. unter dem Markennamen Geniosil® GF 96 von der Fa. Wacker Chemie), N-(2-Aminoethyl)-3-aminoprpyltrimethoxysilan (erhältlich z.B. unter dem Markennamen Geniosil® GF 9 sowie Geniosil® GF 91 von der Fa. Wacker Chemie), N-(2-Aminoethyl)-3-aminoprpylmethyldimethoxysilan (erhältlich z.B. unter dem Markennamen Geniosil® GF 95 von der Fa. Wacker Chemie) u.ä.

Zum Einsatz, insbesondere im Rahmen von Additionen an Isocyanatfunktionelle Verbindungen, kommen beispielsweise sekundäre Aminosilane und Mercapto - funktionelle Silane, wie beispielsweise Bis-(2-tri-methoxysilylethyl)amin, Bis-(2-triethoxysilylethyl)amin, Bis (3-triethoxysilylpropyl)amin (erhältlich unter dem Handelsnamen Dynasylan® 1122 bei der Firma Degussa), Bis (3-trimethoxysilylpropyl)amin (erhältlich unter dem Handelsnamen Dynasylan® 1124 bei der Firma Degussa), Bis-(4-triethoxysilylbutyl)amin, N-(n-butyl)-3-aminopropyltrimethoxysilan (erhältlich unter dem Handelsnamen Dynasylan® 1189 bei der Firma Degussa), N-(n-butyl)-3-aminopropyltriethoxysilan, N-Cyclohexyl-3-aminopropyltrimethoxysilan (erhältlich unter dem Markennamen Geniosil® GF 92 von der Fa. Wacker Chemie), N-Cyclohexyl-3-aminopropyltriethoxysilan, 3-Mercaptopropyltrimethoxysilan (erhältlich von der Fa. Degussa unter dem Handelsnamen Dynasylan® MTMO), 3-Mercaptopropyltriethoxysilan, N-Cyclohexylaminomethylmethyldiethoxysilan (erhältlich von der Fa. Wacker Chemie unter dem Handelsnamen Geniosil® XL 924), N-Cyclohexylaminomethyltriethoxysilan (erhältlich von der Fa. Wacker Chemie unter dem Handelsnamen Geniosil® XL 926), N-Phenylaminomethyltrimethoxysilan (erhältlich von der Fa. Wacker Chemie unter dem Handelsnamen Geniosil® XL 973) u.ä..

### 2) Epoxy - funktionelle Silane

Epoxy - funktionelle Silane können insbesondere zur Addition an Carbonsäure- oder Anhydrid- funktionelle Verbindungen eingesetzt werden. Beispiele für geeignete epoxy - funktionelle Silane sind 3-Glycidyloxypropyltrimethoxysilan (erhältlich bei der Fa. Degussa unter dem Handelsnamen Dynasylan® GLYMO), 3-Glycidyloxypropyltriethoxysilan (erhältlich bei der Fa. Degussa unter dem Handelsnamen Dynasylan® GLYEO) u.ä..

### 3) Anhydrid - funktionelle Silane

Anhydrid - funktionelle Silane können insbesondere zur Addition an Epoxy - funktionelle Verbindungen eingesetzt werden. Beispielhaft für ein Silan mit Anhydrid - Funktionalität sei 3-(Triethoxysilyl)propylbernsteinsäureanhydrid (erhältlich von der Fa. Wacker Chemie unter dem Handelsnamen Geniosil® GF 20) genannt.

### 4) Silane mit ethylenisch ungesättigten Doppelbindungen

Derartige Silane können im Rahmen von Michael Reaktionen oder auch im Rahmen von metallkatalysierten Reaktionen eingesetzt werden. Beispielhaft werden 3-Methacryloxypropyltrimethoxysilan (erhältlich z. B. bei der Fa. Degussa unter dem Handelsnamen Dynasilan® MEMO, oder bei der Fa. Wacker Chemie unter dem Handelsnamen Geniosil® GF 31), 3-Methacryloxypropyltriethoxysilan, Vinyltrimethoxysilan (erhältlich u. a. bei der Fa. Wacker Chemie unter dem Handelsnamen Geniosil® XL 10), Vinyldimethoxymethylsilan (erhältlich u. a. bei der Fa. Wacker Chemie unter dem Handelsnamen Geniosil® XL 12), Vinyltriethoxysilan (erhältlich u. a. bei der Fa. Wacker Chemie unter dem Handelsnamen Geniosil® GF 56), (Methacryloxymethyl)methyldimethoxysilan (erhältlich u. a. bei der Fa. Wacker Chemie unter dem Handelsnamen Geniosil® XL 32), Methacryloxymethyltrimethoxysilan (erhältlich u. a. bei der Fa. Wacker Chemie unter dem Handelsnamen Geniosil® XL 33), (Methacryloxymethyl)methyldiethoxysilan (erhältlich u. a. bei der Fa. Wacker Chemie unter dem Handelsnamen Geniosil® XL 34), Methacryloxymethyltriethoxysilan (erhältlich u. a. bei der Fa. Wacker Chemie unter dem Handelsnamen Geniosil® XL 36) genannt.

### 5) Silane mit Isocyanatofunktion oder Carbamatfunktion

Silane mit Isocyanatofunktion oder Carbamatfunktion kommen insbesondere zum Einsatz im Rahmen von Reaktionen mit Hydroxy-funktionellen Verbindungen. Beispiele für Silane mit Isocyanatofunktion sind beispielsweise in der noch nicht veröffentlichten amerikanischen Patentanmeldung mit der Serial Number 11/227,867 beschrieben.

Geeignete Isocyanatoalkyltrialkoxysilane sind beispielsweise Isocyanatopropyltrimethoxysilan, Isocyanatopropylmethyldimethoxysilan, Isocyanatopropylmethyldiethoxysilan, Isocyanatopropyltriethoxysilan, Isocyanatopropyltriisopropoxysilan, Isocyanatopropylmethydiisopropoxysilan; Isocyanatoneohexyltrimethoxysilan, Isocyanatoneohexyldimethoxysilan, Isocyanatoneohexyldiethoxysilan, Isocyanatoneohexyltriethoxysilan, Isocyanatoneohexyltriisopropoxysilan, Isocyanatoneohexyldiisopropoxysilan, Isocyanatoisoamyltrimethoxysilan, Isocyanatoisoamylmethyldimethoxysilan, Isocyanatoisoamylmethyldiethoxysilan, Isocyanatoisoamyltriethoxysilan, Isocyanatoisoamyltriisopropoxysilan und Isocyanatoisoamylmethyldiisopropoxysilan. Viele Isocyanatoalkyltri- und -di-alkoxysilane sind im Handel beispielsweise unter der Bezeichnung SILQUEST® der Firma OSi Specialties, Inc., einem Unternehmen der Witco Corporation, erhältlich.

Das verwendete Isocyanatopropylalkoxysilan hat bevorzugt einen hohen Reinheitsgrad, insbesondere von mindestens 95%, und ist bevorzugt frei von Additiven, wie Umesterungskatalysatoren, die zu unerwünschten Nebenreaktionen führen können.

Zum Einsatz kommen insbesondere (Isocyanatomethyl)methyldimethoxysilan (erhältlich bei der Fa. Wacker - Chemie unter dem Markennamen Geniosil® XL 42), 3-Isocyanatopropyltrimethoxysilan (erhältlich bei der Fa. Wacker - Chemie unter dem Markennamen Geniosi®l XL 40) und N-Dimethoxy(methyl)silylmethyl-O-methylcarbamat (erhältlich bei der Fa. Wacker - Chemie unter dem Markennamen Geniosil® XL 65).

Als Silankomponente (S1) für die Umsetzung mit der Verbindung (O) können auch anstelle oder zusammen mit diesen monomeren Silanen, die mindestens eine funktionelle Gruppe G' aufweisen, Addukte eingesetzt werden, die mindestens eine funktionelle Gruppe G' und mindestens eine Alkoxysilangruppe aufweisen. Diese als Komponente (S1) geeigneten Addukte sind herstellbar durch eine Additionsreaktion der Silane mit mindestens einer, insbesondere mehr als einer, funktionellen Gruppe G' und einer Verbindung (V2), die mindestens eine, bevorzugt mindestens zwei komplementäre funktionelle Gruppen G2 aufweist, die mit funktionellen Gruppen G' des Silans reaktiv sind. Insbesondere werden solche Addukte als Silankomponente (S1) eingesetzt, um die Alkoxyfunktionalität ohne wesentlichen Molekulargewichtsaufbau zu erhöhen. Bevorzugt weisen daher die Verbindungen (V2) ein zahlenmittleres Molekulargewicht unter 1000, insbesondere unter 500 auf.

Bevorzugt ist es, die als Silane (S1) eingesetzten Addukte in situ durch eine entsprechende Addition aufzubauen, während gleichzeitig die Umsetzung mit der oder den Verbindung(en) (O) durchgeführt wird. Als Additionsreaktion kommen dabei die bereits oben erwähnten Additionsreaktionen in Betracht.

Daneben ist es aber auch denkbar, die Verbindung(en) (O) zunächst mit einer Verbindung (V1) umzusetzen, die mindestens eine, bevorzugt mindestens zwei komplementäre funktionelle Gruppen aufweist, die mit den funktionellen Gruppen der Verbindung (O) reaktiv sind. Diese Reaktion kann vor der Umsetzung mit dem Silan (S1) erfolgen. Sie wird aber bevorzugt in situ durchgeführt, d.h. während gleichzeitig die Umsetzung mit dem Silan (S1) erfolgt. Bevorzugt weisen die Verbindungen (V1) ein zahlenmittleres Molekulargewicht unter 1000, insbesondere unter 500 auf.

Eine Option eines solchen "in situ" Verfahrens umfasst die nicht vollständige Umsetzung eines Isocyanates, insbesondere eines Di- oder Polyisocyanates mit einer oder mehreren Verbindungen (O), die sekundäre Aminogruppen oder Hydroxylgruppen aufweisen. Die verbleibenden Isocyanatgruppen können dann mit geeigneten organofunktionellen Silanen umgesetzt werden. Bevorzugt werden hierzu Silane mit sekundären Aminofunktionen eingesetzt, aber auch alle anderen Silane, die reaktiv gegenüber Isocyanaten sind, können eingesetzt werden.

Es ist erfindungswesentlich, dass das Silan (S1) in einer Additionsreaktion mit einer oder mehreren Verbindungen (O) modifiziert worden ist, wobei es entscheidend ist, dass die Verbindung (O) mindestens einen oberflächenaktiven Rest aufweist. Unter oberflächenaktivem Rest werden dabei Reste verstanden, die dazu führen, dass sich die diesen Rest tragenden Verbindungen (O) aus dem Beschichtungsmittel heraus an der Grenzfläche Luft/Beschichtung stark anreichern.

Die Verbindung (O) weist eine um 1 mN/m geringere Oberflächenspannung, bevorzugt eine um mindestens 5 mN/m geringere Oberflächenspannung, als die Oberflächenspannung des Silans (S1).

Die Messung der Oberflächenspannung erfolgt dabei bei einer Temperatur von 23 °C. Zur Bestimmung der Oberflächenspannung wurde die sogenannte Ringmethode eingesetzt. Dabei misst man mit einem sogenannten Ring - Tensiometer die maximale Kraft, die beim Herausziehen eines Platinringes aus der Phasengrenze der Flüssigkeit am Umfang des Ringes angreift. Dabei wird die Oberfläche der zu untersuchenden Flüssigkeit zur Messung der Oberflächenspannung langsam vergrößert, wobei sich das System immer im Gleichgewichtszustand befindet. Die Kraft, die zur Vergrößerung der Oberfläche notwendig ist, wird gemessen und in die Oberflächenspannung umgerechnet. Eine detailliertere Erläuterung zu der Methode ist u. a. im Buch "Lackeigenschaften messen und steuern" von G. Meichsner, Th. G. Mezger, J. Schröder, herausgegeben von Ulrich Zoll, erschienen im Vincentz Verlag 2003, Seite 96 ff. beschrieben.

Bevorzugt wird die Verbindung (O) so ausgewählt, dass das resultierende Addukt (A) in dem Beschichtungsmittel oberflächenaktiv ist. Unter oberflächenaktiven Addukten (A) werden hier und im Folgenden solche Addukte (A) verstanden, die sich aus dem Beschichtungsmittel heraus an der Grenzfläche Luft/Beschichtung stark anreichern.

Diese Anreicherung der Addukte (A) an der Grenzfläche Luft/Beschichtung wird üblicherweise dadurch erreicht, dass eine gewisse Unverträglichkeit des Adduktes mit dem filmbildenden Material (D) besteht. Allerdings sollte diese Unverträglichkeit wiederum nicht zu hoch sein, um Verlaufsstörungen des Beschichtungsmittels zu vermeiden. Des weiteren sind bei der Verwendung der oberflächenaktiven Addukte die weiteren physikalischen Limitierungen der resultierenden Lackformulierung sowie die des zu beschichtenden Substrates zu berücksichtigen. Ein besonders wichtiger Aspekt ist neben - einer ausreichenden Verträglichkeit - insbesondere die Benetzung der zu beschichtenden Substrate. Diese kann u. a. durch die Messung der kritischen Oberflächenspannung nach der Zismann - Methode abgeschätzt werden. Eine detailliertere Erläuterung zu diesem Verfahren ist u. a. im Buch "Lackeigenschaften messen und steuern" von G. Meichsner, Th. G. Mezger, J. Schröder, herausgegeben von Ulrich Zoll, erschienen im Vincentz Verlag 2003, beschrieben. In diesem Zusammenhang sind derartige Addukte (A) besonders bevorzugt, die es - allein oder im Zusammenwirken mit weiteren grenzflächenaktiven Additiven - ermöglichen, eine Oberflächenspannung der jeweiligen Lackformulierung einzustellen, die unterhalb der kritischen Oberflächenspannung für das jeweilige zu beschichtende Substrat liegt.

Besonders bevorzugt sind Addukte (A), die es - allein oder im Zusammenwirken mit weiteren grenzflächenaktiven Additiven - ermöglichen, eine Oberflächenspannung der jeweiligen Lackformulierung einzustellen, die mindestens 5 mN / m unterhalb der kritischen Oberflächenspannung für das jeweilige zu beschichtende Substrat liegt.

Wie bereits ausgeführt, kommen als Verbindungen (O) mit niedriger Oberflächenspannung solche Verbindungen in Betracht, die mindestens einen oberflächenaktiven Rest aufweisen. Insbesondere sind die oberflächenaktiven Reste der Verbindung (O) ausgewählt aus der Gruppe der Kohlenwasserstoff-Reste und deren Derivaten, wie beispielsweise der fluorierten Kohlenwasserstoffreste, der Fettsäurereste und deren Derivaten sowie der Siloxan-Reste und deren Derivaten, wie beispielsweise der fluorierten Siloxan-Reste, ausgewählt.

Die oberflächenaktiven Kohlenwasserstoff-Reste sind insbesondere lineare oder verzweigte aliphatische Ketten, die bevorzugt mindestens 5 C-Atome und besonders bevorzugt 12 bis 36 C-Atome aufweisen und die gegebenenfalls noch entsprechende Substituenten, wie beispielsweise Fluorreste, tragen können. Hinsichtlich der höheren Homologen sind verzweigte Strukturen oder Strukturen, die Aufgrund von Funktionalisierungen bei Raumtemperatur keine Kristallisation zeigen, bevorzugt.

Beispiele für als Verbindung (O) eingesetzte Verbindungen mit einem Kohlenwasserstoff-Rest sind insbesondere Alkane, Alkene und Alkine sowie deren Derivate, die zusätzlich noch mindestens eine funktionelle Gruppe G" aufweisen. Bevorzugt weist die oberflächenaktive Verbindung (O) mindestens eine Hydroxyl-, Isocyanat-, Epoxy-, Carboxyl-, Amino- und/oder Thiolgruppe und/oder ethylenisch ungesättigte Doppelbindung auf.

Neben den monofunktionellen Bausteinen können auch difunktionelle Verbindungen (O) oder höher funktionelle Verbindungen (O) eingesetzt werden.

Beispiele für Verbindungen mit niedrigerer Oberflächenspannung, die reaktiv zum eingesetzten organofunktionellen Silan sind, sind insbesondere aliphatische Alkohole, Fettsäuren und Fettsäurederivate mit jeweils linearen oder verzweigten aliphatischen Ketten mit im Allgemeinen mindestens 5 C - Atomen und bevorzugt mit 12 bis 36 C-Atomen. Besonders bevorzugt sind lineare und / oder verzweigte Fettsäurederivate mit 12 - 36 C- Atomen.

Ganz allgemein sind für die Reaktion mit organofunktionellen Silanen die gesättigten Verbindungen (O) bevorzugt. Dies ist begründet in der hohen Witterungsstabilität, die die resultierenden Beschichtungen garantieren müssen.

Beispielhaft für derartige Verbindungen können Octanol, Nonanol, Decanol, Undecylalkohol, Dodecylalkohol, und die entsprechend höheren Homologe genannt werden. Aufgrund der geringeren Kristallisationsneigung ist z.B. der Einsatz von Isostearinalkohol (z. B erhältlich unter dem Handelsnamen Isofol von der Firma Condea) gegenüber dem Einsatz von n-Stearylalkohol bevorzugt.

Beispiele für difunktionelle Ausgangsstoffe sind z. B. Isomere des Dihydroxyoctan, Isomere des Dihydroxynonan, Isomere des Dihydroxydecan, Isomere des Dihydroxyundecan und entsprechend höhere Homologe.

Als oberflächenaktive Bausteine geeignet sind auch die Derivate von gesättigten und/oder ungesättigten Fettsäuren, insbesondere von gesättigten und/oder ungesättigten Fettsäuren mit 5 bis 30 Kohlenstoffatomen im Molekül, wie z. B. Reste der Valeriansäure, Capronsäure, der Önanthsäure, Caprylsäure, Perlagonsäure, Caprinsäure, Undecylsäure, Laurinsäure, Myristinsäure, Palmitinsäure, Stearinsäure, Ölsäure, Elaidinsäure, Arachinsäure, Behensäure, Lignocerinsäure, Cerotinsäure, Melissinsäure, Linolsäure, Ricinensäure, Ricinolsäure, Linolensäure, Arachidonsäure, Clupanodonsäure, alpha-Elaeostearinsäure, alpha-Licansäure, alpha-Parinarsäure, Ricinolsäure und Isanolsäure und Mischungen dieser Fettsäuren und/oder die entsprechenden Hydroxysäuren der genannten Fettsäuren bzw. deren Mischungen. So können als oberflächenaktive Verbindung (O) auch Hydroxyvaleriansäure, Hydroxycapronsäure, Hydroxystearinsäure, Hydroxylaurinsäure, Ricinolsäure oder deren Mischungen eingesetzt werden.

Geeignet sind ferner auch die entsprechenden Reste von Dimer- und Trimerfettsäuren sowie deren Mischungen. Beispielhaft seien hier Dimerfettsäurediole genannt. Sie sind im Handel beispielsweise unter der Bezeichnung Pripol® der Firma Unichema erhältlich. Sie sind herstellbar durch Reduktion der entsprechenden Dimerfettsäuren, wie dies beispielsweise beschrieben ist in Karlheinz Hill, "Fats and Oils as Oleochemical Raw Materials," Pure Appl. Chem., Vol. 72, Nr. 7, Seiten 1255-1264 (2000), insbesondere Seite 1261. Beispielsweise geeignet ist das im Handel erhältliche PRIPOL 2033 der Unichema North America, Chicago, III., USA.

Auch epoxidierte Fettsäuren können als Reaktionspartner für Anhydrid - funktionelle Silane eingesetzt werden.

Weitere Beispiele für entsprechende Verbindungen (O) mit einem Kohlenwasserstoffrest als oberflächenaktivem Rest sind Aminfunktionelle Verbindungen mit niedriger Oberflächenspannung.

Beispielhaft für derartige Verbindungen können Octylamin, Nonylamin, Decylamin, Undecylamin, Dodecylamin, und die entsprechend höheren Homologe genannt werden.

Neben den monofunktionellen Bausteinen können auch difunktionelle Verbindungen (O) oder höher funktionelle Verbindungen (O) eingesetzt werden. Beispiele für difunktionelle Ausgangsstoffe sind z. B. Isomere des Diamino-octans, Isomere des Diamino-nonans, Isomere des Diamino-decans, Isomere des Diamino-undecans und entsprechende höhere Homologe.

Neben den Amin - funktionellen Verbindungen (O) können auch die entsprechenden Mercapto-funktionellen Derivate eingesetzt werden. Des weiteren können insbesondere auch Isocyanat - funktionelle Fettsäurederivate als Verbindungen (O) eingesetzt werden. Beispielhaft sei hier das Stearylisocyanat genannt, welches z. B. als Reaktionspartner mit sek. - Aminfunktionellen Silanen eingesetzt werden kann.

In Fällen, in denen eine besonders niedrige Oberflächenspannung der Silan - funktionellen Harze notwendig ist, werden bevorzugt auch organische Substanzen mit fluorierten Seitenketten, insbesondere fluorierte Kohlenwasserstoffe, eingesetzt. Beispielhaft dafür sind die Methacrylate mit fluorierten Seitenketten genannt, die z.B. im Rahmen von Michael - Additionen mit Amin - funktionellen Silanen umgesetzt werden können, oder 3-Fluorobenzylalkohol als OH - funktionelle Komponente. Des Weiteren können aber auch andere fluorierte Substanzen mit niedriger Oberflächenspannung, die reaktiv gegenüber den entsprechenden Silanen sind, eingesetzt werden.

Für die Reaktion mit den Si-H - Gruppen der Silane können auch verschiedene ungesättigte Oligomere und Polymere eingesetzt werden. Besonders bevorzugt werden 1,2 Polybutadiene sowie verschiedene Copolymere der 1,2 Polybutadiene eingesetzt. Des weiteren können Polyisobutylene mit endständigen Doppelbindungen eingesetzt werden. Darüber hinaus können auch oberflächenaktive gepfropfte Polymere oder gepfropfte Copolymere mit ethylenisch ungesättigten Doppelbindungen in den Seitenketten eingesetzt werden.

Des weiteren können als Verbindung (O) auch Siloxane oder deren Derivate eingesetzt werden.

Geeignet sind prinzipiell alle Polysiloxane, die im Mittel mindestens eine funktionelle Gruppe G" aufweisen, die mit den komplementären funktionellen Gruppen G' der Silane (S1) reaktiv ist. Insbesondere werden Polysiloxane, die mindestens eine Hydroxyl-, Carboxyl-, Amin- und/oder Thiolgruppe, Vinyl-, Isocyanat- und/oder Epoxygruppe, insbesondere Glycidylgruppe, und/oder Anhydridgruppe und/oder Acryloyl- und Methacryloylgruppe, insbesondere mindestens eine Hydroxyl-, Carboxyl-, Amin- und/oder Thiolgruppe aufweisen, eingesetzt.

Geeignet sind beispielweise Polysiloxane der Formel (III) 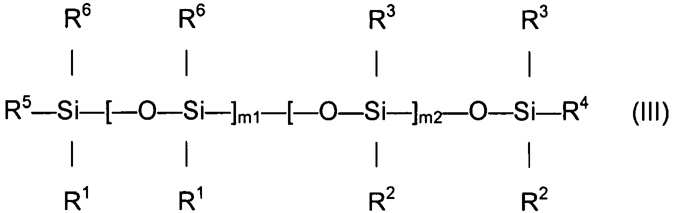 mit
R¹ bis R⁶ gleichen oder verschiedenen Resten,
R¹ = Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann, mit Fluor substituierte Alkyl-, Cycloalkyl-, Aryl- oder Aralkylreste, wobei Strukturen, die einen Ethylen-Rest zwischen dem Siliciumatom und dem mit Fluor substituierten organischen Rest aufweisen, bevorzugt sind,
R² = Hydroxy, Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann,
R³ und R⁶ = Wasserstoff, Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann, mit Fluor substituierte Alkyl-, Cycloalkyl-, Aryl- oder Aralkylreste, wobei Strukturen, die einen Ethylen-Rest zwischen dem Siliciumatom und dem mit Fluor substituierten organischen Rest aufweisen, bevorzugt sind,
R⁴ und R⁵ = Wasserstoff, Hydroxy, Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann,
wobei mindestens einer der Reste R² , R⁴ und R⁵ zusätzlich eine funktionelle Gruppe G" trägt, die reaktiv gegenüber der komplementären funktionellen Gruppe G' des Silans (S1) ist,
   und
m₁ = 1 bis 80, bevorzugt 3 bis 20 und
m₂ = 0 bis 80, bevorzugt 0 bis 10.

Bevorzugt ist dabei die funktionelle Gruppe G" jeweils ausgewählt aus Hydroxyl-, Carboxyl-, Amin- und/oder Thiolgruppen, Vinyl-, Isocyanat- und/oder Epoxygruppen, insbesondere der Glycidylgruppen, und der Anhydridgruppen sowie der Acryloyl- und Methacryloylgruppen.

Durch die Variation des Molekulargewichtes der jeweiligen Siloxanketten kann die Verträglichkeit der resultierenden Addukte mit den Beschichtungsmitteln gezielt variiert werden. Um eine gute Verträglichkeit mit den Beschichtungsmitteln zu erhalten, werden besonders bevorzugt Siloxane (O) mit vergleichsweise niedrigem Molekulargewicht eingesetzt. Diese Siloxane sind beispielsweise auch in der Anmeldung US 20040209088, Abschnitt [0017] bis [0019], beschrieben und werden ausdrücklich ebenfalls als bevorzugte Einsatzstoffe erwähnt.

Grundsätzlich kann das Molekulargewicht des als Verbindung (O) eingesetzten Siloxans je nach der zu erwartenden Verträglichkeit mit den zu modifizierenden Beschichtungsmitteln angepasst werden. Es hat sich jedoch gezeigt, dass in vielen Fällen eher niedrige Molekulargewichte eine gute Verträglichkeit zeigen. Vor diesem Hintergrund werden entsprechend niedrige Molekulargewichte bevorzugt, die sich in den bevorzugten Polymerisationsgraden m₁ und m₁ widerspiegeln.

Hinsichtlich der nicht funktionellen Substituenten an den jeweiligen Siliciumatomen innerhalb der Siloxankette können ebenfalls Variationen, je nach der zu erwartenden Verträglichkeit der Komponenten mit den zu modifizierenden Beschichtungsmitteln durchgeführt werden. Um gezielt die Oberflächenspannung zu erniedrigen und somit die erfindungsgemäßen Addukte zu erhalten, werden bevorzugt als nicht - funktionelle Reste Methyl-, Ethyl- und Phenylreste sowie Alkylreste, die zum Teil mit Fluor substituiert sind, eingesetzt. Besonders bevorzugt wird der Methylrest als nicht - funktioneller Rest eingesetzt.

Um die Siloxane gezielt verträglicher zu machen, können als Seitenketten auch Oligomere oder Polymere des Ethylenoxids oder Propylenoxids eingeführt werden.

Bevorzugt werden Polysiloxane der Formel (IV) eingesetzt: 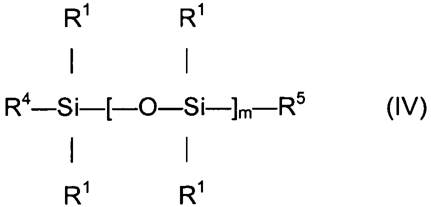 wobei
R¹, R⁴ und R⁵ die vorstehend genannte Bedeutung haben und
m = 1 bis 80, bevorzugt 3 bis 20 und besonders bevorzugt 5 bis 12.

Als oberflächenaktive Verbindung geeignete Siloxane sind beispielsweise auch die in der Patentanmeldung US 20040209088, in den Absätzen [0012] bis [0018] genannten Verbindungen.

Insbesondere werden carbinolfunktionelle Siloxane der oben genannten Formel (IV) eingesetzt.

Beispiele für als Verbindung (O) geeignete Siloxane mit Hydroxylgruppen sind carbinol-terminierte Dimethylsiloxan-caprolacton- Blockcopolymere (kommerziell erhältlich von ABCR GMBH & CO. KG , Karlsruhe unter der Artikel - Nummer AB127698), carbinolfunktionelles Methylsiloxan-dimethylsiloxan-copolymer (kommerziell erhältlich von ABCR GMBH & CO. KG , Karlsruhe unter der Artikel - Nummer AB127701 und AB127700), carbinol-terminiertes Polydimethylsiloxan (kommerziell erhältlich von ABCR GMBH & CO. KG , Karlsruhe unter der Artikel - Nummer AB153380), monocarbinol-terminiertes Polydimethylsiloxane(kommerziell erhältlich von ABCR GMBH & CO. KG , Karlsruhe unter der Artikel - Nummer AB127710 und AB109345 und AB146681 und AB146683 und AB146682), und insbesondere die carbinolfunktionellen Siloxane.

Ganz besonders bevorzugt sind funktionelle Siloxane mit symmetrischer Struktur der nachfolgenden Formel (V): 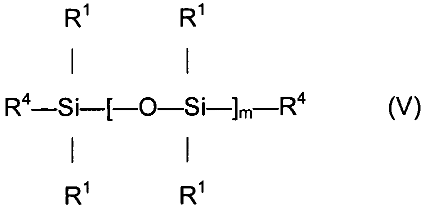 wobei
R¹ und R⁴ die vorstehend genannte Bedeutung haben und Methyl-, Ethyl- und Phenylreste sowie Alkylreste, die zum Teil mit Fluor bzw. der funktionellen Gruppe G" substituiert sind, bevorzugt sind. Besonders bevorzugt wird der Methylrest als nicht - funktioneller Rest eingesetzt und/oder die funktionelle Gruppe G" ist eine Hydroxylgruppe.
m = 1 bis 80, bevorzugt 3 bis 20 und besonders bevorzugt 5 bis 12.

Ganz besonders bevorzugt werden Siloxane der Formel (V) eingesetzt, bei denen R⁴ eine Hydroxylgruppe enthält. Bevorzugt wird das carbinolfunktionelle Polysiloxan Baysilone® OF 502 der GE Bayer Silicones eingesetzt. Das Material ist in verschiedenen Molekulargewichten erhältlich, z. B. Baysilone® OF 502 6 % und Baysilone® OF 502 3 %. In diesem Zusammenhang wird das Material Baysilone® OF 502 6 %, welches ein niedrigeres Molekulargewicht aufweist, bevorzugt.

Des weiteren kommen Siloxane mit primären oder sekundären Amin - Funktionen gemäß der Formeln (IV) oder (V) besonders bevorzugt zum Einsatz, wie beispielsweise Aminopropylmethylsiloxane-dimethylsiloxane-Copolymer (kommerziell erhältlich von ABCR GMBH & CO. KG, Karlsruhe unter der Artikel - Nummer AB109374 und AB109373 und AB109375).

In den erfindungsgemäßen Beschichtungsmitteln besonders bevorzugt eingesetzte Addukte (A) sind erhältlich durch ein "in situ" Verfahren, welches die nicht vollständige Umsetzung eines Isocyanates, insbesondere Di- oder Polyisocyanates, mit einer der oben genannten oberflächenaktiven Verbindung(en), die sekundäre Amingruppen oder Hydroxylgruppen aufweisen, umfasst. Die verbleibenden Isocyanatgruppen können dann mit geeigneten organofunktionellen Silanen umgesetzt werden. Bevorzugt werden hierzu Silane mit sekundären Aminofunktionen eingesetzt, aber auch allen anderen organofunktionellen Silane, die reaktiv gegenüber Isocyanaten sind, können eingesetzt werden.

Ganz besonders bevorzugt werden daher als Addukt (A) Verbindungen eingesetzt, die mindestens einen reaktiven Rest der Formel (VI) aufweisen:

-N R"'-C(O)-N-(L-SiR"x(OR')3-x)n(L'-SiR"y(OR')3-y)m (VI)

mit
R"' = Wasserstoff, Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl und
R' = Wasserstoff, Alkyl oder Cycloalkyl, wobei die Kohlenstoffkette durch nicht benachbarte Sauerstoff-, Schwefel- oder NRa- Gruppen unterbrochen sein kann, mit Ra = Alkyl, Cycloalkyl, Aryl oder Aralkyl,
L, L' = linearer und/oder verzweigter Alkylen- oder Cycloalkylenrest mit 1 bis 20 Kohlenstoffatomen, insbesondere mit 1 bis 4 C-Atomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann,
n = 0 bis 2, m = 0 bis 2 und m + n = 2
   sowie
x, y = 0 bis 2.

Diese bevorzugten erfindungsgemäßen Addukte (A), die mindestens einen reaktiven Rest der Formel (VI) aufweisen, sind vorzugsweise durch Umsetzung von
- mindestens einem Di- und/oder Polyisocyanat (PI) mit
- mindestens einem Aminosilan der Formel (VII)

   H-N-(L-SiR"x(OR')3-x)n(L'-SiR"y(OR')3-y)m (VII),

   wobei die Substituenten R', L, L', R" und die Indices n, m, x und y die bei der Formel (VI) genannte Bedeutung haben,
   und
- mindestens einer oberflächenaktiven Verbindung (O)
hergestellt worden.

Besonders bevorzugte Aminosilane (VII) sind Bis(2-ethyltrimethoxysilyl)-amin, Bis(3-propyltrimethoxysilyl)amin, Bis(4-butyltrimethoxysilyl)amin, Bis(2-ethyltriethoxysilyl)amin, Bis(3-propyltriethoxysilyl)amin und/oder Bis(4-butyltriethoxysilyl)amin. Ganz besonders bevorzugt ist Bis(3-propyltrimethoxysilyl)amin. Solche Aminosilane sind beispielsweise unter dem Markennamen DYNASILAN® 1124 der Fa. DEGUSSA bzw. Silquest® der Fa. OSI Specialities INC. verfügbar.

Als Di- und/oder Polyisocyanate (PI) für die Herstellung dieser Addukte (A) sind an sich bekannte substituierte oder unsubstituierte aromatische, aliphatische, cycloaliphatische und/oder heterocyclische Di- und/oder Polyisocyanate geeignet. Beispiele für bevorzugte Di- und/oder Polyisocyanate sind: 2,4-Toluoldiisocyanat, 2,6-Toluoldiisocyanat, Diphenylmethan-4,4'-diisocyanat, Diphenylmethan-2,4'-diisocyanat, p-Phenylendiisocyanat, Biphenyldiisocyanate, 3,3'-Dimethyl-4,4'-diphenylendiisocyanat, Tetramethylen-1,4-diisocyanat, Hexamethylen-1,6-diisocyanat, 2,2,4-Trimethylhexane-1,6-diisocyanat, Isophorondiisocyanat, 2-Isocyanatopropylcyclohexylisocyanat, Dicyclohexylmethan-2,4'-diisocyanat, Dicyclohexylmethan-4,4'-diisocyanat, 1,4- oder 1,3-Bis(isocyanatomethyl)cyclohexan, 1,4- oder 1,3- oder 1,2-Diisocyanatocyclohexan, 2,4-oder 2,6-Diisocyanato-1-methylcyclohexan, Diisocyanate, abgeleitet von Dimerfettsäuren, wie sie unter der Handelsbezeichnung DDI 1410 von der Firma Henkel vertrieben werden, Ethylendiisocyanat, 1,12-Dodecandiisocyanat, Cyclobutan-1,3-diisocyanat, Cyclohexan-1,3-diisocyanat, Cyclohexan-1,4-diisocyanat, Methylcyclohexyldiisocyanate, Hexahydrotoluol-2,4-diisocyanat, Hexahydrotoluol-2,6-diisocyanat, Hexahydrophenylen-1,3-diisocyanat, Hexahydrophenylen-1,4-diisocyanat, Perhydrodiphenylmethan-2,4'-diisocyanat, 4,4'-Methylendicyclohexyldiisocyanat (z.B. Desmodur® W der Fa. Bayer AG), Tetramethylxylyldiisocyanate (z.B. TMXDI® der Fa. American Cyanamid) und Mischungen der vorgenannten Polyisocyanate. Weiterhin bevorzugte Polyisocyanate sind die Biuret-Dimere und die Isocyanurat-Trimere der vorgenannten Diisocyanate.

Besonders bevorzugte Polyisocyanate (PI) sind Hexamethylen-1,6-diisocyanat, Isophorondiisocyanat und 4,4'-Methylendicyclohexyldiisocyanat, deren Biuret-Dimere und/oder Isocyanurat-Trimere.

In einer weiteren Ausführungsform der Erfindung sind die Polyisocyanate (PI) Polyisocyanat-Präpolymerisate mit Urethan-Struktureinheiten, welche durch Umsetzung von Polyolen mit einem stöchiometrischen Überschuss an vorgenannten Polyisocyanaten erhalten werden. Solche Polyisocyanat-Präpolymere sind beispielsweise in US-A-4,598,131 beschrieben.

Ganz besonders bevorzugte Addukte (A) sind Umsetzungsprodukte von Hexamethylen-1,6-diisocyanat und Isophorondiisocyanat, und/oder deren Isocyanurat-Trimere mit Bis(3-propyltrimethoxysilyl)amin und mindestens einem hydroxylgruppenhaltigen Polysiloxan der oben genannten Formel (V) als oberflächenaktiver Verbindung (O).

Die Umsetzung der Polyisocyanate mit den Aminosilanen erfolgt vorzugsweise in Inertgasatmosphäre bei Temperaturen von maximal 100 °C, bevorzugt von maximal 60 °C.

Bevorzugt sind bei der Umsetzung der Di- und/oder Polyisocyanate mit den Aminosilanen (VII) mindestens 50 mol- %, besonders bevorzugt mindestens 70 mol- %, und maximal 98 mol- %, insbesondere maximal 99 mol-%, der Isocyanatgruppen des Di- und/oder Polyisocyanates (PI) zu Struktureinheiten (VI) umgesetzt. Die restlichen Isocyanatgruppen werden dann mit geeigneten oberflächenaktiven Verbindungen (O) umgesetzt. Es ist aber auch möglich, zunächst einen Teil des Di- und/oder Polyisocyanates mit geeigneten oberflächenaktiven Verbindungen (O) umzusetzen und anschließend die Umsetzung mit den Aminosilanen vorzunehmen. Schließlich ist auch eine gleichzeitige Umsetzung aller Verbindungen miteinander möglich ("in situ" - Verfahren).

Die Mengen der Di- und/oder Polyisocyanate und der Aminosilane (VII) und der oberflächenaktiven Verbindung (O) werden bevorzugt so gewählt, dass das Addukt (A) im Mittel weniger als 50 mol- % freie Isocyanatgruppen aufweist.

Die oberflächenaktive Verbindung (O) wird üblicherweise in einer Menge von 0,05 bis 50 Gew.- %, bevorzugt in einer Menge von 0,1 bis 10 Gew.-%, jeweils bezogen auf den Gehalt an eingesetztem Addukt (A) ohne Lösemittel, eingesetzt.

Der Anteil der Addukte (A) an dem erfindungsgemäßen Beschichtungsmittel beträgt üblicherweise von 0,1 bis 35 Gew.- % bevorzugt von 0,5 bis 15 Gew.- %, besonders bevorzugt von 1 bis 10 Gew.- %, jeweils bezogen auf den Gehalt an nichtflüchtigen Substanzen im Beschichtungsmittel.

### Katalysator (C)

Grundsätzlich können als Katalysatoren (C) für die Vernetzung der -Si(OR')3-x(y)-Einheiten an sich bekannte Verbindungen eingesetzt werden. Beispiele sind Lewis-Säuren (Elektronenmangelverbindungen), wie beispielsweise Zinnnaphtenat, Zinnbenzoat, Zinnoctoat, Zinnbutyrat, Dibutylzinndilaurat, Dibutylzinndiacetat, Dibutylzinnoxid und Bleioctoat. Diese sind jedoch hinsichtlich ihrer Toxizität bedenklich. Insbesondere, wenn wirksame Mengen für die Silanvernetzung eingesetzt werden sollen, neigen derartige Katalysatoren zur Vergilbung, insbesondere beim "Überbrennen", d. h. der Vernetzung bei höherer Temperatur, z. B. bei 160 °C. Eine derartige Überbrennstabilität ist jedoch eine Voraussetzung für den Einsatz von OEM Klarlacken in der Serienproduktion. Andere toxikologisch weniger bedenkliche Katalysatoren sind Metallkomplexe mit Chelatliganden auf der Basis von Aluminium oder auch Zink, wie beispielsweise die in WO-A-2006/042585, Seite 10, Zeilen 4 bis 21 beschriebenen Katalysatoren. Auch diese Katalysatoren neigen zu starker Vergilbung beim Überbrennen und sollen daher in den erfindungsgemäßen Formulierungen möglichst nicht eingesetzt werden.

Hinsichtlich der toxikologischen Eigenschaften und der Vergilbung bei Überbrennprüfungen sind Katalysatoren, die auf Derivaten von Phosphor - haltigen Säuren basieren, erfindungsgemäß bevorzugt.

Als Katalysator (C) werden daher insbesondere substituierte Phosphonsäurediester und Diphosphonsäurediester, vorzugsweise aus der Gruppe, bestehend aus acyclischen Phosphonsäurediestern, cyclischen Phosphonsäurediestern, acyclischen Diphosphonsäurediestern und cyclischen Diphosphonsäurediestern, sowie substituierte Phosphorsäuremonoester und Phosphorsäurediester, vorzugsweise aus der Gruppe, bestehend aus acyclischen Phosphorsäurediestern und cyclischen Phosphorsäurediestern, oder die entsprechenden aminblockierten Ester eingesetzt. Geeignete phosphorhaltige Katalysatoren sind beispielsweise in der noch nicht veröffentlichten deutschen Patentanmeldung DE P102005045228.0-44 beschrieben.

So können beispielsweise acyclische Phosphonsäurediester (C) der allgemeinen Formel (VIII) 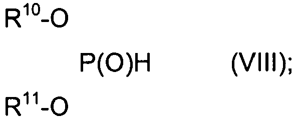 eingesetzt werden.

In der allgemeinen Formel (VIII) sind die Reste R¹⁰ und R¹¹ gleich oder voneinander verschieden; vorzugsweise sind sie gleich.

Die Reste R¹⁰ und R¹¹ werden aus der Gruppe, bestehend aus:
- substituiertem und unsubstituiertem Alkyl- mit 1 bis 20, vorzugsweise 2 bis 16 und insbesondere 2 bis 10 Kohlenstoffatomen, Cycloalkyl- mit 3 bis 20, vorzugsweise 3 bis 16 und insbesondere 3 bis 10 Kohlenstoffatomen und Aryl- mit 5 bis 20, vorzugsweise 6 bis 14 und insbesondere 6 bis 10 Kohlenstoffatomen,
- substituiertem und unsubstituiertem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und
- substituiertem und unsubstituiertem Rest- der vorstehend aufgeführten Art, enthaltend mindestens ein, insbesondere ein, Heteroatom, ausgewählt aus der Gruppe bestehend aus Sauerstoffatom, Schwefelatom, Stickstoffatom, Phosphoratom und Siliziumatom, insbesondere Sauerstoffatom, Schwefelatom und Stickstoffatom
ausgewählt.

Es können beispielsweise auch cyclische Phosphonsäurediester (C) der allgemeinen Formel (IX): 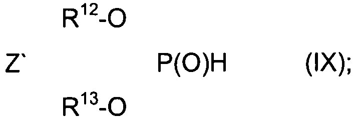 eingesetzt werden.

In der allgemeinen Formel (IX) sind die Reste R¹² und R¹³ gleich oder voneinander verschieden; vorzugsweise sind sie gleich.

Die Reste R¹² und R¹³ werden aus der Gruppe, bestehend aus:
- substituiertem und unsubstituiertem, zweibindigem Alkyl- mit 1 bis 20, vorzugsweise 1 bis 10 und insbesondere 1 bis 6 Kohlenstoffatomen, Cycloalkyl- mit 3 bis 20, vorzugsweise 3 bis 10 und insbesondere 3 bis 6 Kohlenstoffatomen und Aryl- mit 5 bis 20, vorzugsweise 6 bis 14 und insbesondere 6 bis 10 Kohlenstoffatomen;
- substituiertem und unsubstituiertem, zweibindigem Alkylaryl-, Arylalkyl-, Alkylcycloalkyl-, Cycloalkylalkyl-, Arylcycloalkyl-, Cycloalkylaryl-, Alkylcycloalkylaryl-, Alkylarylcycloalkyl-, Arylcycloalkylalkyl-, Arylalkylcycloalkyl-, Cycloalkylalkylaryl-und Cycloalkylarylalkyl-, wobei die hierin enthalten Alkyl-, Cycloalkyl- und Arylgruppen jeweils die vorstehend aufgeführte Anzahl von Kohlenstoffatomen enthalten und
- substituiertem und unsubstituiertem, zweibindigem Rest- der vorstehend aufgeführten Art, enthaltend mindestens ein, insbesondere ein, Heteroatom, ausgewählt aus der Gruppe, bestehend aus Sauerstoffatom, Schwefelatom, Stickstoffatom, Phosphoratom und Siliciumatom,
ausgewählt.

In der allgemeinen Formel (IX) steht die Variable Z' für
- eine kovalente Bindung zwischen einem Atom des Rests R¹² und einem Atom des Rests R¹³;
- eine zweibindige, verküpfende Gruppe, ausgewählt aus der Gruppe, bestehend aus Sauerstoffatom, substituiertem, insbesondere mit Sauerstoff substituiertem, und unsubstituiertem Schwefelatom, substituiertem, insbesondere mit Alkyl substituiertem, Stickstoffatom, substituiertem, insbesondere mit Sauerstoff substituiertem, Phosphoratom und substituiertem, insbesondere mit Alkyl und Alkoxy substituiertem Siliciumatom, insbesondere Sauerstoffatom; oder
- eine zweibindige, verküpfende Gruppe, ausgewählt aus der Gruppe, bestehend aus substituiertem und unsubstituiertem, mindestens ein Heteroatom, ausgewählt aus der Gruppe, bestehend aus Sauerstoffatom, Schwefelatom, Stickstoffatom, Phosphoratom und Siliciumatom, insbesondere Sauerstoffatom, Schwefelatom und Stickstoffatom, enthaltendem oder von Heteroatomen freiem Alkyl mit 1 bis 10, vorzugsweise 1 bis 6 und insbesondere 1 bis 4 Kohlenstoffatomen, Cycloalkyl mit 3 bis 10, vorzugsweise 3 bis 6 und insbesondere 6 Kohlenstoffatomen und Aryl mit 5 bis 10 und insbesondere 6 Kohlenstoffatomen.

Ferner können auch beispielsweise acyclische Diphosphonsäurediester (C) der allgemeinen Formel (X):

(R¹⁰-O)(O)PH-O-PH(O)(O-R¹¹) (X);

worin die Variablen die vorstehend angegebene Bedeutung haben, eingesetzt werden.

Schließlich können auch beispielsweise cyclische Diphosphonsäurediester (C) der allgemeinen Formel (XI): 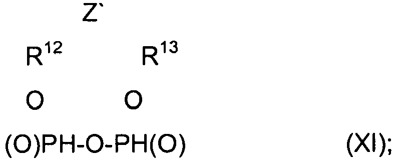 worin die Variablen die vorstehend angegebene Bedeutung haben, eingesetzt werden.

Als Substituenten für die Reste R¹⁰, R¹¹, R¹² und R¹³ kommen alle Gruppen und Atome in Betracht, die die Wirkung der Phosphonsäurediester und der Diphosphonsäurediester (C) nicht beeinträchtigen, die Härtungsreaktionen in den erfindungsgemäßen Gemischen nicht inhibieren, nicht zu unerwünschten Nebenreaktionen führen und keine toxische Wirkung hervorrufen. Beispiele geeigneter Substituenten sind Halogenatome, Nitrilgruppen oder Nitrogruppen, bevorzugt Halogenatome, insbesondere Fluoratome, Chloratome und Bromatome.

Vorzugsweise sind die Reste R¹⁰, R¹¹, R¹² und R¹³ und/oder die Reste R¹⁰ und R¹¹ aus der Gruppe, bestehend aus Phenyl, Methyl und Ethyl, ausgewählt.

Bevorzugt werden die acyclischen Phosphonsäurediester (C) der allgemeinen Formel (VIII) verwendet, insbesondere solche, bei denen die Reste R¹⁰ und R¹¹ der allgemeinen Formel (VIII) aus der Gruppe, bestehend aus Phenyl, Methyl und Ethyl, ausgewählt sind. Ein Beispiel für einen gut geeigneten Phosphonsäurediester (C) der allgemeinen Formel (VIII) ist Diphenylphosphonat, das manchmal von der Fachwelt (nicht ganz korrekt) auch als Diphenylphosphit bezeichnet wird.

Besonders bevorzugt werden als Katalysator (C) entsprechend substituierte Phosphorsäuremonoester und Phosphorsäurediester, vorzugsweise aus der Gruppe, bestehend aus acyclischen Phosphorsäurediestern und cyclischen Phosphorsäurediestern, eingesetzt.

Dabei werden die acyclischen Phosphorsäurediester (C) insbesondere aus der Gruppe, bestehend aus acyclischen Phosphorsäurediestern (C) der allgemeinen Formel (XII): 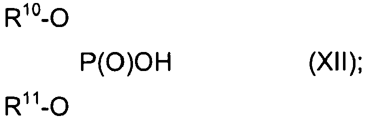 ausgewählt, wobei R¹⁰ und R¹¹ die oben angegebene Bedeutung haben und zusätzlich auch Wasserstoff darstellen können (Teilversterung).

Beispiele für ganz besonders gut geeignete Phosphorsäureester (C) sind die entsprechenden aminblockierten Phosphorsäureester, und hier insbesondere aminblockierter Phosphorsäureethylhexylester und aminblockierter Phosphorsäurephenylester.

Hinsichtlich des Amins, mit welchem die Phosphorsäureester blockiert werden, ist Triethylamin besonders bevorzugt. Bestimmte, mit Amin blockierte Phosphorsäurekatalysatoren sind auch kommerziell erhältlich. Beispielsweise sei der unter der Bezeichnung Nacure 4167 von der Firma King Industries als besonders geeigneter Katalysator auf der Basis eines Amin - blockierten Phosphorsäureteilesters genannt.

Der Katalysator (C) wird üblicherweise in Anteilen von 0,1 bis 15 Gew.-%, bevorzugt von 0,5 bis 5 Gew.- %, bezogen auf die nichtflüchtigen Bestandteile des Beschichtungsmittels, eingesetzt.

### Filmbildendes Material (D)

Als filmbildendes Material (D) können Verbindungen eingesetzt werden, welche mit den Si(OR)3-Gruppen der Komponente (A) und/oder mit sich selbst, gegebenenfalls unter Katalyse, und/oder einem Vernetzungsmittel (VM) Netzwerkpunkte ausbilden können.

Bei der Auswahl der filmbildenden Materialien (D) ist bevorzugt zu beachten, dass bei der Härtung der Beschichtungsmittel nicht oder in nur sehr geringem Umfang hydrolyselabile Si-N-C- und/oder Si-O-C-Netzpunkte gebildet werden.

Beispielsweise können als Komponente (D) Oligomerisate oder Polymerisate mit Si(OR)3-Gruppen eingesetzt werden, wie z.B. die in den Patent(anmeldung)en US-A-4,499,150, US-A-4,499,151 oder EP-A-0 571 073 genannten Poly(meth)acrylate.

Insbesondere werden als filmbildendes Material solche Verbindungen eingesetzt, die wenigstens eine reaktive funktionelle Gruppe G'" enthalten, bevorzugt ausgewählt aus der Gruppe der mittels Strahlung vernetzbaren Gruppen, insbesondere der Acrylatgruppen und Methacrylatgruppen, und/oder aus der Gruppe der thermisch vernetzbaren Gruppen, insbesondere der Hydroxylgruppen, Carbamatgruppen, Epoxygruppen, Isocyanatgruppen, Carboxylgruppen und Anhydridgruppen, besonders bevorzugt der Acrylat-und/oder Methacrylatgruppen und/oder Hydroxylgruppen und/oder Carbamatgruppen.

Als filmbildendes Material (D) können daher beispielsweise ein oder mehrere Doppelbindungen aufweisende Oligo- und/oder Polyurethan-(meth)acrylate, Polyester(meth)acrylate, Epoxy(meth)acrylate, (meth)-acrylfunktionelle (Meth)Acrylcopolymere, Polyether(meth)acrylate, ungesättigte Polyester, Amino(meth)acrylate, Melamin(meth)acrylate und/oder Silikon(meth)acrylate, bevorzugt Polyurethan(meth)acrylate und/oder Polyester(meth)acrylate eingesetzt werden, die ggf. zusätzlich zu den Doppelbindungen auch noch Carbamat-, Biuret-, Allophanat-, Amid-, Harnstoff-, Hydroxyl-, Carboxyl- und/oder Epoxidgruppen aufweisen können.

Die Urethan(meth)acrylate können in dem Fachmann bekannter Weise aus Di- bzw. Polyisocyanaten, mindestens einer Verbindung, die gegenüber Isocyanatgruppen reaktive Gruppen enthält, und mindestens einer Verbindung, die gegenüber Isocyanatgruppen reaktive Gruppen und mindestens eine ethylenisch ungesättigte Gruppe enthält, durch Mischen der Komponenten in beliebiger Reihenfolge, gegebenenfalls bei erhöhter Temperatur, hergestellt werden.

Insbesondere werden die Urethan(meth)acrylate erhalten, indem das Di- oder Polyisocyanat vorgelegt wird und daraufhin mindestens ein Hydroxyalkyl(meth)acrylat oder Hydroxyalkylester anderer ethylenisch ungesättigter Carbonsäuren zugegeben wird, wodurch zunächst ein Teil der Isocyanatgruppen umgesetzt wird. Nachfolgend wird ein Kettenverlängerungsmittel aus der Gruppe der Diole/Polyole und/oder Diamine/Polyamine und/oder Dithiole/Polythiole und/oder Alkanolamine zugegeben und so die restlichen Isocyanatgruppen mit dem Kettenverlängerungsmittel umgesetzt.

Die neben den Urethan(meth)acrylaten geeigneten Polyester(meth)-acrylate sind dem Fachmann prinzipiell bekannt. Sie sind durch verschiedene Methoden herstellbar. Beispielsweise kann Acrylsäure und/- oder Methacrylsäure direkt als Säurekomponente beim Aufbau der Polyester eingesetzt werden. Daneben besteht die Möglichkeit, Hydroxyalkylester der (Meth)Acrylsäure als Alkoholkomponente direkt beim Aufbau der Polyester einzusetzen. Bevorzugt werden die Polyester(meth)-acrylate aber durch Acrylierung von Polyestern hergestellt. Beispielsweise können zunächst hydroxylgruppenhaltige Polyester aufgebaut werden, die dann mit Acryl- oder Methacrylsäure umgesetzt werden. Es können auch zunächst carboxylgruppenhaltige Polyester aufgebaut werden, die dann mit einem Hydroxyalkylester der Acryl- oder Methacrylsäure umgesetzt werden. Nicht umgesetzte (Meth)Acrylsäure kann durch Auswaschen, Destillieren oder bevorzugt durch Umsetzen mit einer äquivalenten Menge einer Mono- oder Diepoxidverbindung unter Verwendung geeigneter Katalysatoren, wie z.B. Triphenylphosphin, aus dem Reaktionsgemisch entfernt werden. Bezüglich weiterer Einzelheiten zur Herstellung der Polyesteracrylate sei insbesondere auf die DE-OS 33 16 593 und die DE-OS 38 36 370 sowie auch auf die EP-A-54 105, die DE-AS 20 03 579 und die EP-B-2866 verwiesen.

Auch die weiterhin geeigneten Polyether(meth)acrylate sind dem Fachmann ebenfalls prinzipiell bekannt. Sie sind durch verschiedene Methoden herstellbar. Beispielsweise können hydroxylgruppenhaltige Polyether, die mit Acrylsäure und/oder Methacrylsäure verestert werden, durch Umsetzung von zwei- und/oder mehrwertigen Alkoholen mit verschiedenen Mengen an Ethylenoxid und/oder Propylenoxid nach gut bekannten Methoden (vgl. z.B. Houben-Weyl, Band XIV, 2, Makromolekulare Stoffe II, (1963)) erhalten werden. Einsetzbar sind auch Polymerisationsprodukte des Tetrahydrofurans oder Butylenoxids.

Ferner sind auch Epoxy(meth)acrylate dem Fachmann wohl bekannt und brauchen daher nicht näher erläutert zu werden. Sie werden üblicherweise hergestellt durch durch Anlagerung von Acrylsäure an Epoxidharze, beispielsweise an Epoxidharze auf Basis Bisphenol A oder andere handelsübliche Epoxidharze.

Als filmbildende Komponente (D) werden bevorzugt Mischungen aus einem oder mehreren Bindemitteln (BM) und einem oder mehreren Vernetzungsmitteln (VM) eingesetzt.

Als Bindemittel (BM) geeignet sind oligomere und/oder polymere Verbindungen, die reaktive Gruppen aufweisen, die mit den komplentären reaktiven Gruppen des Vernetzungsmittels (VM) reagieren. Insbesondere werden als Bindemittel (BM) Verbindungen eingesetzt, die Hydroxylgruppen, Carbamatgruppen, Epoxygruppen, Isocyanatgruppen, Carboxylgruppen und Anhydridgruppen, besonders bevorzugt Hydroxylgruppen und/oder Carbamatgruppen, aufweisen.

Eingesetzt werden insbesondere Bindemittel (BM) auf Basis von Polyurethanen und/oder Poly(meth)acrylaten und/oder Polyestern.

Die Bindemittel weisen üblicherweise gelpermeationschromatographisch gegen Polystyrolstandard bestimmte zahlenmittlere Molekulargewichte von 500 bis 20.000, insbesondere von 500 bis 4000 auf.

Bevorzugt beträgt die OH-Zahl der OH-Gruppen enthaltenden Bindemittel zwischen 50 und 500 mgKOH/g, insbesondere zwischen 70 und 250 mgKOH/g, jeweils titrimetrisch bestimmt, insbesondere nach der DIN EN ISO 4629, Ausgabe 07.1998.

Carbamatgruppen enthaltende Bindemittel weisen üblicherweise ein rechnerisches Carbamatäquivalentgewicht CEW von 250 bis 700 g/Äquivalent, insbesondere von 250 bis 500 g/Äquivalent, auf.

Als Bindemittel (BM) werden beispielsweise (Meth)Acrylatcopolymerisate eingesetzt, die erhältlich sind, indem
(a1) 10 bis 80 Gew.- %, bevorzugt 20 bis 60 Gew.- %, 3-Hydroxypropylacrylat oder 3-Hydroxypropylmethacrylat oder 2-Hydroxy propylacrylat oder 2-Hydroxypropylmethacrylat oder 2-Hydroxyethylacrylat oder 2-Hydroxyethylmethacrylat oder 4-Hydroxy-n-butylacrylat oder 4-Hydroxy-n-butylmethacrylat oder Mischungen dieser Monomeren,
(b1) 0 bis 30 Gew.- %, bevorzugt 0 bis 15 Gew.- % eines von (a1) verschiedenen hydroxylgruppenhaltigen Esters der Acrylsäure oder eines hydroxylgruppenhaltigen Esters der Methacrylsäure oder eines Gemisches aus solchen Monomeren,
(c1) 0 bis 90 Gew.- %, bevorzugt 10 bis 70 Gew.- %, eines von (a1) und (b1) verschiedenen aliphatischen oder cycloaliphatischen Esters der (Meth)acrylsäure mit mindestens 4 Kohlenstoffatomen im Alkoholrest oder eines Gemisches aus solchen Monomeren,
(d1) 0 bis 3 Gew.- %, bevorzugt 0 bis 2 Gew.- %, einer ethylenisch ungesättigten Carbonsäure oder einer Mischung aus ethylenisch ungesättigten Carbonsäuren und
(e1) 0 bis 50 Gew.- %, bevorzugt 0 bis 35 Gew.- %, eines Vinylaromaten und/oder eines von (a1), (b1), (c1) und (d1) verschiedenen ethylenisch ungesättigten Monomeren oder eines Gemisches aus solchen Monomeren
copolymerisiert werden, wobei die Summe der Gewichtsanteile der Komponenten (a1), (b1), (c1), (d1) und (e1) stets 100 Gew.-% ergibt.

Die Bindemittel (BM) auf Basis von Polyurethanen werden in dem Fachmann bekannter Weise durch Umsetzen von Di- und/oder Polyisocyanaten und Kettenverlängerungsmittel hergestellt, wobei es durch die Funktionalität des Kettenverlängerungsmittels möglich ist, die gewünschten funktionellen Gruppen, beispielsweise Hydroxyl-, Carboxylgruppen, Thiolgruppen, Aminogruppen und/oder Carbamatgruppen, einzuführen.

So kann beispielsweise ein Teil der vorhandenen freien Isocyanatgruppen noch mit Verbindungen umgesetzt werden, die eine isocyanatreaktive Gruppe, vorzugsweise ausgewählt aus der Gruppe, bestehend aus Hydroxyl-, Thiol- und primären und sekundären Aminogruppen, insbesondere Hydroxylgruppen, sowie mindestens ggf. eine weitere funktionelle Gruppe, vorzugsweise ausgewählt aus der Gruppe bestehend aus Carboxylgruppen, Carbamatgruppen und Anhydridgruppen, enthalten. Beispiele geeigneter Verbindungen dieser Art sind Hydroxyessigsäure, Hydroxypropionsäure oder Gamma-Hydroxybuttersäure und Hydroxypropylcarbamat.

Beispiele für geeignete Di- und/oder Polyisocyanate sind die bereits oben bei der Beschreibung der Addukte (A) aufgeführten Verbindungen.

Die Vernetzungsmittel (VM) sind insbesondere ausgewählt aus der Gruppe der Aminoplastharze, unblockierten Polyisocyanate, blockierten Polyisocyanate, Polyepoxide, Polycarbonsäuren, Polyanhydride und der Polyole.

Es kommen die üblichen und bekannten Aminoplastharze in Betracht, deren Methylol- und/oder Methoxymethylgruppen z. T. mittels Carbamat- oder Allophanatgruppen defunktionalisiert sein können. Vernetzungsmittel dieser Art werden in den Patentschriften US-A-4 710 542 und EP-B-0 245 700 sowie in dem Artikel von B. Singh und Mitarbeiter "Carbamylmethylated Melamines, Novel Crosslinkers for the Coatings Industry" in Advanced Organic Coatings Science and Technology Series, 1991, Band 13, Seiten 193 bis 207, beschrieben.

Geeignete Vernetzungsmittel (VM) sind auch Epoxyharze, welche bevorzugt mit sich selbst unter der Katalyse der Komponente (C) reagieren, besonders bevorzugt aliphatische Epoxyharze, welche eine hohe Witterungsstabilität aufweisen. Solche Epoxyharze sind beispielsweise in der Monographie von B.Ellis "Chemistry and Technology of Epoxy Resins" (Blackie Academic & Professional, 1993, Seiten 1 bis 35) beschrieben.

Bevorzugt werden als Vernetzungsmittel (VM) Di- und/oder Polyisocyanate eingesetzt. Sofern es sich bei den erfindungsgemäßen Beschichtungsmitteln um 1-Komponenten-Lacke handelt, werden blockierte Polyisocyanate, und bei 2-Komponenten-Lacken unblockierte Polyisocyanate eingesetzt.

Beispiele für geeignete Di- und/oder Polyisocyanate sind die oben bereits bei den Addukten (A) beschriebenen Di- und/oder Polyisocyanate. Bevorzugt werden aliphatische und/oder cycloaliphatische Di- und/oder Polyisocyanate eingesetzt.

Bei Einsatz der Isocyanate in 1K-Lacken werden die Isocyanate in dem Fachmann bekannter Weise mit einem Blockierungsmittel umgesetzt, wobei sich die Auswahl des Blockierungsmittels insbesondere nach der gewünschten Härtungstemperatur richtet, wie dies dem Fachmann bekannt ist.

In der Regel wird das filmbildende Material (D) in Anteilen von 50 bis 99,8 Gew.- %, bevorzugt von 80 bis 99,4 Gew.- %, besonders bevorzugt von 85 bis 98,5 Gew.- %, bezogen auf die nichtflüchtigen Bestandteile des Beschichtungsmittels, eingesetzt.

Die Bindemittel (BM) werden üblicherweise in Anteilen von 1 bis 70 Gew.- %, bevorzugt von 5 bis 50 Gew.- %, besonders bevorzugt von 20 bis zu 45 Gew.- %, bezogen auf die nichtflüchtigen Bestandteile des Beschichtungsmittels, eingesetzt.

Die Vernetzungsmittel (VM) werden üblicherweise in Anteilen von 1 bis 70 Gew.- %, bevorzugt von 10 bis 60 Gew.- %, besonders bevorzugt von 25 bis zu 55 Gew.- %, bezogen auf die nichtflüchtigen Bestandteile des Beschichtungsmittels, eingesetzt.

### Lösemittel (L)

Als erfindungsgemäße Komponente (L) sind aprotische Lösemittel geeignet, die im Beschichtungsmittel chemisch inert gegenüber den übrigen Komponenten sind und die auch bei der Härtung des Beschichtungsmittels nicht reagieren. Beispiele für solche Lösemittel sind aliphatische und/oder aromatische Kohlenwasserstoffe wie Toluol, Xylol, Solventnaphtha®, Solvesso 100 oder Hydrosol® (Fa. ARAL), Ketone, wie Aceton, Methylethylketon oder Methylamylketon, Ester, wie Ethylacetat, Butylacetat, Pentylacetat oder Ethylethoxypropionat, Ether oder Mischungen aus den vorgenannten Lösemitteln. Bevorzugt weisen die aprotischen Lösemittel oder Lösemittelgemische einen Wassergehalt von maximal 1 Gew.- %, besonders bevorzugt maximal 0,5 Gew.- %, bezogen auf das Lösemittel auf.

### Weitere Bestandteile

Die erfindungsgemäßen Beschichtungsmittel können außerdem übliche Hilfs- und Zusatzstoffe, wie beispielsweise Katalysatoren für die Vernetzung des filmbildenden Materials (D), Entschäumer, Haftvermittler, Additive zur Verbesserung der Untergrundbenetzung, Additive zur Verbesserung der Oberflächenglätte, Mattierungsmittel, Lichtschutzmittel, vorzugsweise UV-Absorber und/oder HALS, Korrosionsinhibitoren, Biozide, Flammschutzmittel oder Polymerisationsinhibitoren, wie sie in dem Buch "Lackadditive" von Johan Bielemann, Wiley-VCH, Weinheim, New York, 1998, im Detail beschrieben werden, in üblichen Mengen, insbesondere in Mengen von bis zu 5 Gew.- %, bezogen auf das Gesamtgewicht des Beschichtungsmittels, enthalten.

Besonders bevorzugte Beschichtungsmittel werden erhalten, wenn der Gehalt an anderen, nicht vernetzenden oberflächenaktiven Substanzen, also an oberflächenaktiven Substanzen ausgenommen die Addukte (A), möglichst niedrig gehalten wird. Insbesondere liegt der Gehalt an diesen anderen, nicht vernetzenden oberflächenaktiven Substanzen unter 0,5 Gew.- % und besonders bevorzugt unter 0,1 Gew.- %, jeweils bezogen auf das Gesamtgewicht des Beschichtungsmittels. Beispiele für solche anderen, nicht vernetzenden oberflächenaktiven Substanzen sind insbesondere übliche Verlaufsadditive u.ä..

### Effekt- und/oder farbgebende Mehrschichtlackierungen

Die erfindungsgemäßen Beschichtungsmittel eignen sich hervorragend als dekorative, schützende und/oder effektgebende, hoch kratzfeste Beschichtungen und Lackierungen, insbesondere als transparente Beschichtung einer effekt- und/oder farbgebenden Mehrschichtlackierung, von Karosserien von Fortbewegungsmitteln oder von Teilen hiervon (insbesondere Kraftfahrzeuge, wie Motorräder, Busse oder PKW, Nutzfahrzeuge, wie landwirtschaftliche Maschinen und LKW, sowie Flugzeugbau und Schiffbau, Karosserie-innen- und -außenbauteilen) im Bereich der Serien- und Reparaturlackierung; von Bauwerken im Innen- und Außenbereich; von Möbeln, Fenstern und Türen; von Kunststoffformteilen, insbesondere CDs und Fenster; von industriellen Kleinteilen, von Coils, Containern und Emballagen; von weißer Ware; von Folien; von optischen, elektrotechnischen und mechanische Bauteilen sowie von Glashohlkörpern und Gegenständen des täglichen Bedarfs.

Insbesondere werden die erfindungsgemäßen Beschichtungsmittel und Lackierungen, insbesondere die Klarlackierungen, in dem technologisch und ästhetisch besonders anspruchsvollen Gebiet der Automobilserienlackierung (OEM) eingesetzt. Besonders bevorzugt werden die erfindungsgemäßen Beschichtungsmittel in mehrstufigen Beschichtungsverfahren eingesetzt, insbesondere bei Verfahren, bei dem auf ein gegebenenfalls vorbeschichtetes Substrat mindestens ein pigmentiertes Beschichtungsmittel und danach auf mindestens einen Teil der so erhaltenen pigmentierten Beschichtung ein transparentes Beschichtungsmittel aufgebracht und gehärtet wird, wobei die transparente Besichtung aus den erfindungsgemäßen Beschichtungsmitteln hergestellt wird.

Das Verfahren wird insbesondere in der Automobilserien- und/oder Nutzfahrzeug- und/oder Reparaturlackierung, zur Beschichtung von Karosserie-Innen- oder - Außenbauteilen oder von Bauteilen für den Schiff- und Flugzeugbau oder von Bauteilen für Haushalts- und Elektrogeräte oder von Kunststoffformteilen oder Folien eingesetzt.

Bevorzugt sind daher Mehrschichtlackierungen aus mindestens einer pigmentierten Beschichtung und einer darauf angeordneten transparenten Beschichtung, wobei die transparente Beschichtung aus dem erfindungsgemäßen Beschichtungsmittel hergestellt worden ist.

Die hierbei eingesetzten pigmentierten Beschichtungen können unter Verwendung sowohl wässriger als auch lösemittelhaltiger pigmentierter Beschichtungsmittel hergestellt worden sein, die im Allgemeinen physikalisch oder thermisch und/oder mit aktinischer Strahlung härtbar sind.

Die pigmentierten Beschichtungsmittel enthalten üblicherweise
(I) ein oder mehrere Lösemittel und/oder Wasser
(II) ein oder mehrere Bindemittel, bevorzugt ein oder mehrere Polyurethanharze und/oder Acrylatharze und/oder Polyesterharze, besonders bevorzugt mindestens ein Polyurethanharz,
(III) ggf. mindestens ein Vernetzungsmittel,
(IV) ein oder mehrere Pigmente, insbesondere effekt- und/oder farbgebende Pigmente sowie
(V) ggf. ein oder mehrere übliche Hilfs- und Zusatzstoffe.

Als Bindemittel geeignet sind dabei die in Basislacken im Bereich der Automobilindustrie üblicherweise eingesetzten Polyurethanharze, Acrylatharze und Polyesterharze, wobei in dem Fachmann bekannter Weise über die Auswahl der Art und Menge der zur Herstellung dieser Bindemittel eingesetzten Aufbaukomponenten die Eigenschaften und damit die Eignung der Bindemittel für das erfindungsgemäße Verfahren gesteuert wird.

Bevorzugt eingesetzt werden Polyurethanharze, ggf. in Kombination mit einem oder mehreren Polyacrylatharzen und/oder mit einem oder mehreren Polyesterharzen.

Geeignete pigmentierte Beschichtungsmittel (Basislacke) sind beispielsweise in der EP-A-0 692 007 und in den dort in Spalte 3, Zeilen 50ff., angeführten Dokumenten beschrieben.

Die Applikation der erfindungsgemäßen Beschichtungsmittel kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Es kann aber auch das zu beschichtende Substrat, insbesondere ein Coil, bewegt werden, wobei die Applikationsanlage relativ zum Substrat ruht oder in geeigneter Weise bewegt wird. Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air-Heißspritzen.

Die Aushärtung der applizierten erfindungsgemäßen Beschichtungsmittel kann nach einer gewissen Ruhezeit erfolgen. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen und/oder durch eine reduzierte Luftfeuchte unterstützt und/oder verkürzt werden, sofern hierbei keine Schädigungen oder Veränderungen der Lackschichten eintreten, etwa eine vorzeitige vollständige Vernetzung.

Im Falle strahlenhärtbarer filmbildender Materialien erfolgt die Härtung in dem Fachmann bekannter Weise mittels Strahlung, insbesondere mittels UV-Strahlung. Bevorzugt wird eine Strahlendosis von 100 bis 6.000, vorzugsweise 200 bis 3.000, bevorzugt 300 bis 2.500 und besonders bevorzugt 500 bis 2.000 mJcm⁻² eingesetzt. Die Bestrahlung kann unter einer sauerstoffabgereicherten Atmosphäre durchgeführt werden. "Sauerstoffabgereichert" bedeutet, dass der Gehalt der Atmosphäre an Sauerstoff geringer ist als der Sauerstoffgehalt von Luft (20,95 Vol.- %). Die Atmosphäre kann im Grunde auch sauerstofffrei sein, d. h., es handelt sich um ein Inertgas. Wegen der fehlenden inhibierenden Wirkung von Sauerstoff kann dies aber eine starke Beschleunigung der Strahlenhärtung bewirken, wodurch Inhomogenitäten und Spannungen entstehen können. Es ist daher von Vorteil, den Sauerstoffgehalt der Atmosphäre nicht auf Null Vol.- % abzusenken.

Die thermische Härtung der Beschichtungsmittel weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Eine weitere bevorzugte Härtungsmethode ist die Härtung mit nahem Infrarot (NIR-Strahlung). Vorteilhafterweise erfolgt die thermische Härtung bei einer Temperatur von 50 bis 200°C, besonders bevorzugt 60 bis 190°C und insbesondere 80 bis 180°C während einer Zeit von 1 min bis zu 5 h, besonders bevorzugt 2 min bis zu 2 h und insbesondere 3 min bis 90 min.

Die erfindungsgemäßen Beschichtungsmittel liefern neue gehärtete Beschichtungen, insbesondere Lackierungen, speziell Klarlackierungen, Formteile, speziell optische Formteile, und freitragende Folien, die hoch kratzfest und insbesondere chemikalien- und witterungsstabil sind. Insbesondere lassen sich die erfindungsgemäßen Beschichtungen und Lackierungen, speziell die Klarlackierungen, auch in Schichtdicken > 40 *µ*m herstellen, ohne dass Spannungsrisse auftreten.

So zeichnen sich die gehärteten erfindungsgemäßen Beschichtungen und hierbei bevorzugt die entsprechenden transparenten Beschichtungen einer effekt- und/oder farbgebenden Mehrschichtlackierung, durch eine sehr gute Mikroeindringhärte aus. Bevorzugt weisen die gehärteten Beschichtungen dabei eine Mikroeindringhärte von mindestens 90 N/mm², insbesondere von mindestens 100 N/mm² und ganz besonders bevorzugt von mindestens 110 N/mm², auf. Die Mikroeindringhärte wird dabei an Beschichtungen gemessen, die eine Trockenfilmschichtdicke von 40 *µ*m aufweisen und die 22 min bei 140 °C getrocknet und vor Messung der Mikroeindringhärte 5 Tage bei 25 °C gelagert wurden. Die Mikroeindringhärte wurde entsprechend der DIN EN ISO 14577 mit Hilfe des Fisherscope Messgerätes der Firma Fischer mit einer maximalen Kraft von 25,6 mN bestimmt.

Insbesondere zeichnen sich die gehärteten erfindungsgemäßen Beschichtungen durch eine verbesserte Trockenkratzbeständigkeit aus. Die Trockenkratzbeständigkeit wurde mit Hilfe des Crockmeter - Tests (9 *µ*m Papierkörnung) bestimmt. Dazu wurde in Anlehnung an EN ISO 105 - X 12 verfahren und der Glanzverlust bei 20° nach 10 Doppelhüben ausgewertet. Die erfindungsgemäßen Beschichtungsmittel eignen sich daher auch zur Kratzfestausrüstung von exponierten Stellen von lackierten Automobilkarosserien.

### Verfahren zur Verbesserung der Härte und/oder der Kratzfestigkeit einer Beschichtung

Schließlich betrifft die Erfindung noch ein Verfahren zur Verbesserung der Härte und/oder der Kratzfestigkeit einer Beschichtung, insbesondere einer Mehrschichtlackierung, das dadurch gekennzeichnet ist, dass den zur Herstellung der zu verbessernden Beschichtung verwendeten Beschichtungsmitteln eine Mischung aus dem Katalysator (C) für die Vernetzung der Silangruppen und dem Addukt (A) mit Silanfunktionalität zugesetzt wird, wobei das Addukt (A) herstellbar ist durch eine Additionsreaktion von
(a) mindestens einem Silan (S1), das mindestens eine funktionelle Gruppe G' aufweist, die mit den komplementären funktionellen Gruppen G" der Verbindung (O) reaktiv ist,
   und
(b) einer Verbindung (O), die mindestens eine komplementäre funktionelle Gruppe G" und mindestens einen oberflächenaktiven Rest aufweist.

Gegenstand der Erfindung ist ferner ein Verfahren zur Verbesserung der Härte und der Kratzfestigkeit einer effektgebenden Mehrschichtlackierung, bei dem man
I. auf ein Substrat ein pigmentiertes Beschichtungsmittel aufbringt,
II. aus dem in I) aufgebrachten Beschichtungsmittel einen Film bildet,
III. auf mindestens einen Teil des aus I) gebildeten Films ein transparentes Beschichtungsmittel aufbringt und
IV. das pigmentierte und das transparente Beschichtungsmittel entweder getrennt oder gemeinsam einbrennt, wobei man auf dem Substrat einen gehärteten Film erhält,
wobei das transparente Beschichtungsmittel mindestens ein von dem Addukt (A) verschiedenes filmbildendes Material (D) mit mindestens einer reaktiven, funktionellen Gruppe G"', mindestens einen Katalysator (C) für die Vernetzung der Silangruppen, ein oder mehrere aprotische Lösemittel (L) und das oben beschriebene Addukt (A) mit Silanfunktionalität enthält, bei dem zumindest ein Teil des Adduktes (A) einen oder mehrere oberflächenaktive Reste aufweist.

Die chemischen Oberflächeneigenschaften, insbesondere die Anreicherung des Adduktes (A) an der Oberfläche, können via Photoelektronenspektroskopie (XPS), wobei die Informationstiefe zum Nachweis der Anreicherung via Austrittswinkelvariation oder Sputtertiefenprofilanalyse variiert werden, und mit Hilfe der Transmissionselektronenmikroskopie zusammen mit EDX (energiedispersive Röntgenspektroskopie) bestimmt werden.

Die XPS-Messungen können beispielsweise an einem small-spot-Spektrometer der Fa. Physical Electronics mit der Modellbezeichnung PHI 5600 LS erfolgten. Zur Erzeugung der Röntgenstrahlung wird immer die Mg-Röhre eingesetzt (1253,6 keV). Der Nachweis der Photoelektronen bei einer Pass-Energie von 23,5 eV nutzt folgende Bindungsniveaus zur Bestimmung der Atomkonzentrationen: bei Si das 2p-, bei O das 1s- und ebenso beim C das 1s-Niveau. Durch Variation des Detektionswinkels der Photoelektronen - das ist der Winkel zwischen der Probenoberfläche und der Achse der Elektronenlinsen vor dem Elektronenspektrometer - kann die Tiefe, in der die Messsignale generiert werden (Informationstiefe), verändert werden: Bei 5° ist die Informationstiefe ca. 1,2 nm, bei 45° ca. 10 nm. Bei dem Detektionswinkel von 45° hat die Messfläche eine Durchmesser von 800 *µ*m, bei 5° ist er entsprechend elliptisch vergrößert. Nach Anfertigung von Dünnschnitten mit einem Mikrotom parallel zur Oberfläche und ca. 10 *µ*m unterhalb der Oberfläche lässt sich ein Referenzwert vergleichsweise tief im Material erfassen. Zur Präparation der Dünnschnitte wird von Stahltafeln mit einem entsprechenden Komplettaufbau ausgegangen. Zum Präparieren der Mikrotomschnitte kann ein motorisiertes, handelsübliches Rotationsmikrotom vom Typ RM 2155, erhältlich bei der Firma Leica Mikrosysteme, Bensheim, verwendet werden. Vor dem Schneiden wird zunächst die gewünschte Schichtdicke eingestellt. Anschließend werden die jeweiligen Bleche fixiert. Im eigentlichen Arbeitsgang wird das Rotationsmikrotom über die jeweiligen Bleche gefahren.

Die physikalisch mechanischen Eigenschaften können auch orts- und tiefenaufgelöst mittels Nanoindentation bestimmt werden, beispielsweise mit dem Nanoindentations-Gerät TriboIndenter® von der Fa. Hysitron Inc.. Die Versuchsdurchführung des Tests passiert hierbei wie folgt: Als Eindruckkörper wird eine dreiseitigen Diamantpyramide in Berkovich Geometrie (Öffnungswinkel 142,3°) mit einem möglichst punktförmigen Spitze (Radius < 100nm) verwendet. Dieser Körper wird nun für 10 s mit linear steigender Kraft bis zu einer Maximalkraft von 5 mN in die Beschichtungsoberfläche gedrückt, wobei die Eindringtiefe zwischen 1 *µ*m und 1,5 *µ*m beträgt, verweilt dort weitere 30 s bei maximaler Kraft und wird während der nächsten 10 s mit linear fallender Kraft aus der Oberfläche zurückgezogen. Aus der resultierenden Datensatz Kraft über Eindringtiefe werden nach dem bekannten Algorithmus nach *Oliver und Pharr* (vgl. W. C. Oliver, G. M. Pharr, Journal of Materials Research. 7 (1992), 1565, G. M. Pharr, Materials Science and Engineering A 253 (1998), 151) die mechanischen Daten des untersuchten Materials ortsaufgelöst bestimmt.

### Beispiele

### 1.1. Herstellung eines Adduktes (AV1)

In einem Reaktionsgefäß, ausgerüstet mit Rührer, Rückflusskühler, Ölheizung und Stickstoffeinleitungsrohr, wurden 456,38 Gewichtsteile eines handelsüblichen Isocyanurates von Hexamethylendiisocyanat (Desmodur N 3600 der Firma Bayer AG) vorgelegt. Zu dieser Anlösung des Isocyanurates wurden langsam unter Rühren 815,62 Gewichtsteile N,N-Bis(3-trimethoxysilylpropan-1-yl)amin (Dynasilan® 1124 der Firma Degussa) gegeben. Anschließend wurde noch zwei Stunden bei 55°C gerührt. Hiernach waren IR - spektroskopisch keine freien Isocyanatgruppen mehr nachweisbar. Die so erhaltene Verbindung (AV1) wies einen Festkörpergehalt von 79 % auf.

### 1.2. Herstellung eines oberflächenmodifizierten Adduktes (A1)

In einem Reaktionsgefäß, ausgerüstet mit Rührer, Rückflusskühler, Ölheizung und Stickstoffeinleitungsrohr, wurden 100 Gewichtsteile eines handelsüblichen Isocyanurates von Hexamethylendiisocyanat (Desmodur N 3600 der Firma Bayer AG) vorgelegt. Zu dieser Anlösung des Isocyanurates wurden langsam unter Rühren eine Lösung von 15 Gewichtsteilen eines carbinol - funktionellen Siloxans (Baysilone® OF 502 6% der Firma GE - Bayer Silicone) in 3,75 Gewichtsteilen des handelsüblichen, aromatischen Lösemittels Solventnaphta® zugegeben. Nach erfolgter Zugabe wurde das Reaktionsgemisch auf 55°C erhitzt und noch während 2 Stunden bei 55°C gerührt. Darauf wurden langsam und unter Rühren 172,5 Gewichtsteile N,N-Bis(3-trimethoxysilylpropan-1-yl)amin (Dynasilan® 1124 der Firma Degussa) zu dem Gemisch gegeben. Anschließend wurde noch zwei Stunden bei 55°C gerührt. Hiernach waren IR-spektroskopisch keine freien Isocyanatgruppen mehr nachweisbar. Die so erhaltene Verbindung (A1) wies einen Festkörpergehalt von 80,8 % auf. Die Oberflächenspannung der eingesetzten Edukte und des Adduktes A1 wurde mit Hilfe der Ringmethode bestimmt. Die resultierenden Ergebnisse sind in der folgenden Tabelle zusammengestellt:

| Substanz | Oberflächenspannung σ / [mN/m] |
|---|---|
| N,N-Bis(3-trimethoxysilylpropan-1-yl)amin (Dynasilan® 1124) | 30,3 |
| Baysilone® OF 502 6% (GE - Bayer Silicones) | 21,7 |
| Desmodur N 3600 (Bayer AG) | 43,2 |
| Addukt A1 | 26,5 |

### 1.3. Herstellung eines Katalysators (C1) auf Basis eines aminblockierten Phosphorsäureesters

In einem Reaktor, ausgestattet mit einem Tropftrichter und einem Rückflußkühler wurden 43,2 Gewichtsteile Phosphorsäurephenylester und 39,2 Gewichtsteile Methoxypropylacetat vorgelegt und homogenisiert. Anschließend wurden so langsam unter Kühlung und Rühren 17,6 Gewichtsteile Triethylamin zugetropft, dass die Temperatur 60°C nicht überstieg. Nach erfolgter Zugabe des Triethylamins wurde das Reaktionsgemisch noch 2 Stunden bei Raumtemperatur gerührt. Das resultierende Reaktionsprodukt wies einen Festkörpergehalt von 50,0 % auf.

### 1.4. Herstellung eines hydroxylgruppenhaltigen Polyacrylates (PAC 1)

In einem Reaktor, der mit Stickstoff gespült wurde und auf dem ein Kühler angebracht ist, werden 30,4 Gewichtsteile Solventnaphta® vorgelegt und unter Rühren auf 140°C aufgeheizt. Parallel dazu wurden zwei separate Zuläufe prepariert. Zulauf 1 bestand aus 13,9 Gewichtsteilen Styrol, 26,7 Gewichtsteilen Butylacrylat, 15,0 Gewichtsteilen Hydroxyethylacrylat, und 1,4 Gewichtsteilen Acrylsäure. Zulauf 2 bestand aus 5,9 Gewichtsteilen Solventnaphta® und 1,30 Gewichtsteilen Peroxid DTBP (= Di-tert.-Butylperoxid). Nachdem die Temperatur von 140°C erreicht war, wurde Zulauf 2 langsam und gleichmäßig über einen Zeitraum von 285 Minuten zudosiert. 15 Minuten nach dem Start von Zulauf 2 wurde Zulauf 1 langsam und gleichmäßig über einen Zeitraum von 240 Minuten in den Reaktor dosiert. Nach Ende der Dosierung von Zulauf 2 wurde das Reaktionsgemisch zur Nachpolymerisation noch 120 Minuten bei 140°C gerührt. Der Festkörpergehalt des so erhaltenen Produktes wurde zu 60 %, die Säurezahl zu 19 mg KOH / g und die OH-Zahl zu 128 mg KOH / g (jeweils bezogen auf den Festkörper) und die Viskosität zu 9,5 dPa·s (bei 23 °C) bestimmt.

### 1.5. Herstellung eines Rheologiehilfsmittels auf Acrylatbasis

In 32,02 Gewichtsteilen Solventnaphta® wird aus 25,67 Gewichtsteilen Styrol, 22,30 Gewichtsteilen n - Butylacrylat, 13,87 Gewichtsteilen 2-Hydroxyethylacrylat, 1,41 Gewichtsteilen ethacrylsäure, 0,870 Gewichtsteilen Laurylmethacrylat (MA - 13, erhältlich bei der Fa. Degussa) wird ein Methacrylatcopolymerisat hergestellt.

Aus 84,7 Gewichtsteile des so erhaltenen Methacrylatcopolymerisates, 5,88 Gewichtsteilen Butylacetat, 2,24 Gewichtsteilen Benzylamin und 1,76 Gewichtsteilen Hexamethylendiisocyanat, gelöst in 3,42 Gewichtsteilen Butylacetat, wird ein harnstoffmodifiziertes Rheologiehilfsmittel auf Acrylatbasis hergestellt, das einen Festkörper von 59 % aufwies.

### 2. Herstellung der 1-Komponenten Klarlacke 1 bis 6

Die in Tabelle 1 aufgeführten Rohstoffe wurden zur Herstellung der 1K Klarlacke in den angegebenen Mengen nacheinander zusammengegeben und homogenisiert.

**Tabelle 1. Zusammensetzung der 1K Klarlacke der Vergleichsbeispiele V1, V2, V3 und V4 sowie der erfindungsgemäßen Beispiele 1 und 2**

| Inhaltsstoff [Gew.- teile] | Beispiel V1 | Beispiel 1 | Beispiel V2 | Beispiel V3 | Beispiel 2 | Beispiel V4 |
|---|---|---|---|---|---|---|
| Acrylatharz PAC1 gemäß 1.4. | 25,8 | 25,8 | 25,8 | 25,8 | 25,8 | 25,8 |
| Luwipal 018 BX ¹⁾ | 25,3 | 25,3 | 25,3 | 25,3 | 25,3 | 25,3 |
| Addukt (A1) gemäß 1.2. | 0 | 5,0 | 0 | 0 | 5,0 | 0 |
| Addukt (AV1) gemäß 1.1. | 0 | 0 | 5,00 | 0 | 0 | 5,00 |
| Desmodur PL 350 ²⁾ | 7,6 | 0 | 0 | 7,6 | 0 | 0 |
| Rheologiehilfsmittel gemäß 1.5. | 21 | 21 | 21 | 21 | 21 | 21 |
| Lösemittelg emisch ³⁾ | 0 | 1,9 | 1,9 | 0 | 1,9 | 1,9 |
| Xylol | 1,185 | 1,185 | 1,185 | 1,185 | 1,185 | 1,185 |
| Solventnaphta® | 7,9 | 7,9 | 7,9 | 7,9 | 7,9 | 7,9 |
| Byk 310 ⁴⁾ | 0 | 0 | 0 | 0,1 | 0,1 | 0,1 |
| Baysilon OL 17 ⁵⁾ | 0 | 0 | 0 | 0,015 | 0,015 | 0,015 |
| Tinuvin 5941-R ⁶⁾ | 0,85 | 0,85 | 0,85 | 0,85 | 0,85 | 0,85 |
| Tinuvin 292 ⁷⁾ | 0,05 | 0,05 | 0,05 | 0,05 | 0,05 | 0,05 |
| Solvesso 150 ⁸⁾ | 6,7 | 6,7 | 6,7 | 6,7 | 6,7 | 6,7 |
| Butylglykoldiacetat | 1 | 1 | 1 | 1 | 1 | 1 |
| Katalysator (C1) gemäß 1.3. | 0 | 1 | 1 | 0 | 1 | 1 |
| Nacure 4167 ⁹⁾ | 0,5 | 0,5 | 0,5 | 0,5 | 0,5 | 0,5 |
| Butanol | 2 | 2 | 2 | 2 | 2 | 2 |
| Verlaufsmittel ¹⁰⁾ | 0,7 | 0,7 | 0,7 | 0,7 | 0,7 | 0,7 |

| | | | | | | |
|---|---|---|---|---|---|---|
| Erläuterungen zu Tabelle 1: ¹⁾ : Luwipal 018 BX = handelsübliches, mit Butanol teilverethertes Melamin-Formaldehydharz der Firma BASF AG, 64 - 68%ig in n-Butanol/Xylol 2:1 ²⁾ : Desmodur PL 350 = handelsübliches, aliphatisches, blockiertes Isocyanat der Firma Bayer, 75%ig in 1-Methoxypropylacetat-2/ Solventnaphta® 11/14 ³⁾ : Lösemittelgemisch bestehend aus 1-Methoxypropylacetat-2 und Solventnaphta® im Verhältnis 11 :14 ⁴⁾ : Byk® 310 = handelsübliches Verlaufsadditiv auf Basis einer 25%igen Lösung in Xylol eines polyestermodifizierten Polydimethylsiloxans der Firma Byk-Chemie GmbH, Wesel ⁵⁾ : Baysilon OL 17 = handelsübliches Verlaufsadditiv der Firma Borchers GmbH ⁶⁾ : Tinuvin® 5941 - R = handelsübliche Mischung verschiedener Lichtschutzmittel der Firma Ciba Speciality Chemicals Inc. ⁷⁾ : Tinuvin® 292 = handelsübliches Lichtschutzmittel auf Basis sterisch gehinderter Amine ("HALS") der Firma Ciba Speciality Chemicals Inc. ⁸⁾ : Solvesso 150 = handelsübliches Lösemittel-Gemisch ⁹⁾ : Nacure 4167 = handelsüblicher Katalysator der Firma King Industries auf der Basis eines Amin - blockierten Phosphorsäureteilesters ¹⁰⁾ : Verlaufsmittels auf Acrylatbasis mit einem Festkörpergehalt von 65 %, einer Säurezahl von 3 mg KOH / g (bezogen auf den Festkörper) und einer Viskosität bei 23 °C von 3 dPa·s | | | | | | |

### 3. Herstellung der Beschichtungen

Die einzelnen 1K Klarlacke gemäß Tabelle 1 wurden auf Prüfbleche appliziert, die jeweils mit einer üblichen und bekannten, kathodisch abgeschiedenen, thermisch gehärteten Elektrotauchlackierung, einer üblichen und bekannten, thermisch gehärteten Füllerlackierung und einer während 10 Minuten bei 80°C vorgetrockneten Schicht aus einem handelsüblichen, konventionellen, schwarzen Basislack der Firma BASF Coatings AG beschichtet worden waren, appliziert. Die Basislackschicht und die Klarlackschicht wurden gemeinsam während 22 Minuten bei 140°C gehärtet. Die resultierende Basislackierung wies eine Schichtdicke von 7,5 *µ*m und die Klarlackierung eine Schichtdicke von 40 *µ*m auf.

### 4. Untersuchung der Eigenschaften der resultierenden Beschichtungen

Alle Oberflächen waren hochglänzend und zeigten eine hervorragende Appearance.

Auf den resultierenden Oberflächen wurde die Trockenkratzbeständigkeit mit Hilfe des Crockmeter - Tests (9 *µ*m Papierkörnung) bestimmt. Dazu wurde in Anlehnung an EN ISO 105-X 12 verfahren und der Glanzverlust bei 20° nach 10 Doppelhüben ausgewertet. Außerdem wurde die Pendeldämpfung nach König mit dem Modell 299/300 der Firma Erichsen GmbH & Co KG, Hemer - Sundwig untersucht. Angegeben ist die Anzahl der Schwingungen. Die Mikroeindringhärte wurde entsprechend der DIN 55676 mit Hilfe des Fisherscope Messgerätes der Firma Helmut Fischer GmbH & Co mit einer maximalen Kraft von 25,6 mN bestimmt. Die Ergebnisse sind in Tabelle 2 dargestellt.

**Tabelle 2: Messergebnisse des Crockmetertestes, der Mikroeindringhärte und der Pendeldämpfung nach König (Anzahl der Schwingungen)**

| Test | Klarlack Beispiel V1 | Klarlack Beispiel 1 | Klarlack Beispiel V2 | Klarlack Beispiel V3 | Klarlack Beispiel 2 | Klarlack Beispiel V4 |
|---|---|---|---|---|---|---|
| Mikroeindringhärte [N/mm²] | 98 | 125 | 121 | 112 | 120 | 117 |
| Pendeldämpfung nach König | 58 | 67 | 61 | 59 | 70 | 64 |
| Restglanz nach Crockmeter Test [%] | 23 % | 90 % | 47 % | 59 % | 87 % | 68 % |

Die Ergebnisse zeigen, dass insbesondere die Trockenkratzfestigkeit durch den Zusatz des oberflächenmodifizierten Adduktes (A1) zusammen mit dem Katalysator (C) deutlich erhöht wird (Beispiel 1). Falls dagegen das nicht oberflächenmodifizierte Addukt (AV1) eingesetzt wird (Beispiel V2), ist die Verbesserung insbesondere der Trockenkratzfestigkeit deutlich geringer ausgeprägt. Das Beispiel V3 zeigt, dass auch andere oberflächenaktive Substanzen, wie z.B. handelsübliche Verlaufsmittel zu einer Verbesserung der Eigenschaften führen, die aber wesentlich geringer ausgeprägt sind als bei Zusatz des oberflächenmodifizierten Adduktes (A1). Nur, wenn das Addukt (A) grenzflächenaktive Strukturen (O) aufweist, kann sich an der Oberfläche eine Gradientenstruktur mit einem dichten hochkratzfesten Si - O - Si - Netzwerk bilden, welches die hervorragenden Eigenschaften an der Oberfläche ausbildet. Der Nachweis einer solchen Gradientenstruktur gelingt beispielsweise mit der Röntgenphotoelektronenspektroskopie und mit Hilfe der Transmissionselektronenmikroskopie zusammen mit EDX (energiedispersive Röntgenspektroskopie).

Die physikalisch mechanischen Eigenschaften können auch orts- und tiefenaufgelöst mittels Nanoindentation bestimmt werden, beispielsweise mit dem Nanoindentations-Gerät Tribolndenter® von der Fa. Hysitron Inc.. Die Versuchsdurchführung des Tests passiert hierbei wie folgt: Als Eindruckkörper wird eine dreiseitigen Diamantpyramide in Berkovich Geometrie (Öffnungswinkel 142,3°) mit einem möglichst punktförmigen Spitze (Radius < 100nm) verwendet. Dieser Körper wird nun für 10 s mit linear steigender Kraft bis zu einer Maximalkraft von 5 mN in die Beschichtungsoberfläche gedrückt, wobei die Eindringtiefe zwischen 1 *µ*m und 1,5 *µ*m beträgt, verweilt dort weitere 30 s bei maximaler Kraft und wird während der nächsten 10 s mit linear fallender Kraft aus der Oberfläche zurückgezogen. Aus der resultierenden Datensatz Kraft über Eindringtiefe werden nach dem bekannten Algorithmus nach *Oliver und Pharr* (vgl. W. C. Oliver, G. M. Pharr, Journal of Materials Research. 7 (1992), 1565, G. M. Pharr, Materials Science and Engineering A 253 (1998), 151) die mechanischen Daten des untersuchten Materials ortsaufgelöst bestimmt.

Zur Verdeutlichung des Einflusses des Katalysators (C) wurden die Klarlacke des Beispiels 1 (= Vergleichsbeispiel V5) und des Vergleichsbeispiels V2 (= Vergleichsbeispiels V6) unter Weglassen des Katalysators (C1) wiederholt und analog zu dem Beispiel 1 bzw. V2 die Beschichtungen V5 und V6 hergestellt und die Mikroeindringhärte sowie die Trockenkratzbeständigkeit mit Hilfe des Crockmeter - Tests bestimmt. Die Ergebnisse sind in Tabelle 3 aufgeführt. Die Ergebnisse zeigen, dass die Mikroeindringhärte und die Kratzfestigkeit der Beschichtungen ohne Katalysator (C) deutlich niedriger ausfallen als in den entsprechenden Beispielen mit Katalysator.

**Tabelle 3: Messergebnisse der Vergleichsbeispiels V5 und V6**

| Test | Klarlack Beispiel 1 | Klarlack Beispiel V5 | Klarlack Beispiel V2 | Klarlack Beispiel 6 |
|---|---|---|---|---|
| Mikroeindringhärte [N/mm²] | 125 | 98 | 121 | 100 |
| Restglanz nach Crockmeter Test [%] | 90 % | 73 % | 47 % | 30 % |

### 5.1. Herstellung eines oberflächenmodifizierten Adduktes (A2)

In einem Reaktionsgefäß, ausgerüstet mit Rührer, Rückflusskühler, Ölheizung und Stickstoffeinleitungsrohr, wurden 100 Gewichtsteile eines handelsüblichen Isocyanurates von Hexamethylendiisocyanat (Desmodur® N 3600 der Firma Bayer AG) vorgelegt. Zu dieser Anlösung des Isocyanurates wurden langsam unter Rühren eine Lösung von 2,5 Gewichtsteilen eines carbinol - funktionellen Siloxans (Baysilone® OF 502 6% der Firma GE - Bayer Silicone) in 0,625 Gewichtsteilen des handelsüblichen, aromatischen Lösemittels Solventnaphta® zugegeben. Nach erfolgter Zugabe wurde das Reaktionsgemisch auf 55°C erhitzt und noch während 2 Stunden bei 55°C gerührt. Darauf wurden langsam und unter Rühren 184 Gewichtsteile N,N-Bis(3-trimethoxysilylpropan-1-yl)-amin (Dynasilan® 1124 der Firma Degussa) zu dem Gemisch gegeben. Anschließend wurde noch zwei Stunden bei 55°C gerührt. Hiernach waren IR-spektroskopisch keine freien Isocyanatgruppen mehr nachweisbar. Die so erhaltene Verbindung (A2) wies einen Festkörpergehalt von 89 % auf. Die Oberflächenspannung der so erhaltenen Verbindung (A2) wurde mit der Ringmethode zu 27,0 mN / m bestimmt.

### 5.2. Herstellung eines oberflächenmodifizierten Adduktes (A3)

In einem Reaktionsgefäß, ausgerüstet mit Rührer, Rückflusskühler, Ölheizung und Stickstoffeinleitungsrohr, wurden 100 Gewichtsteile eines handelsüblichen Isocyanurates von Hexamethylendiisocyanat (Desmodur® N 3600 der Firma Bayer AG) vorgelegt. Zu dieser Anlösung des Isocyanurates wurden langsam unter Rühren eine Lösung von 5 Gewichtsteilen des carbinol - funktionellen Siloxans (Baysilone® OF 502 6% der Firma GE - Bayer Silicone) in 1,25 Gewichtsteilen des handelsüblichen, aromatischen Lösemittels Solventnaphta® zugegeben. Nach erfolgter Zugabe wurde das Reaktionsgemisch auf 55°C erhitzt und noch während 2 Stunden bei 55°C gerührt. Darauf wurden langsam und unter Rühren 181 Gewichtsteile N,N-Bis(3-trimethoxysilylpropan-1-yl)amin (Dynasilan® 1124 der Firma Degussa) zu dem Gemisch gegeben. Anschließend wurde noch zwei Stunden bei 55°C gerührt. Hiernach waren IR-spektroskopisch keine freien Isocyanatgruppen mehr nachweisbar. Die so erhaltene Verbindung (A3) wies eine Festkörpergehalt von 90,0 % auf. Die Oberflächenspannung der so erhaltenen Verbindung (A3) wurde mit der Ringmethode zu 26,5 mN / m bestimmt.

### 5.3. Herstellung eines oberflächenmodifizierten Adduktes (A4)

In einem Reaktionsgefäß, ausgerüstet mit Rührer, Rückflusskühler, Ölheizung und Stickstoffeinleitungsrohr, wurden 100 Gewichtsteile eines handelsüblichen Isocyanurates von Hexamethylendiisocyanat (Desmodur® N 3600 der Firma Bayer AG) vorgelegt. Zu dieser Anlösung des Isocyanurates wurden langsam unter Rühren eine Lösung von 10 Gewichtsteilen des carbinol - funktionellen Siloxans (Baysilone® OF 502 6% der Firma GE - Bayer Silicone) in 2,5 Gewichtsteilen eines handelsüblichen, aromatischen Lösemittels Solventnaphta® zugegeben. Nach erfolgter Zugabe wurde das Reaktionsgemisch auf 55°C erhitzt und noch während 2 Stunden bei 55°C gerührt. Darauf wurden langsam und unter Rühren 175 Gewichtsteile N,N-Bis(3-trimethoxysilylpropan-1-yl)amin (Dynasilan® 1124 der Firma Degussa) zu dem Gemisch gegeben. Anschließend wurde noch zwei Stunden bei 55°C gerührt. Hiernach waren IR-spektroskopisch keine freien Isocyanatgruppen mehr nachweisbar. Die so erhaltene Verbindung (A4) wies eine Festkörpergehalt von 91,0 % auf. Die Oberflächenspannung der so erhaltenen Verbindung (A4) wurde mit der Ringmethode zu 26,5 mN / m bestimmt.

### 5.4. Herstellung eines hydroxylgruppenhaltigen Polyacrylates (PAC 2)

In einem Reaktor, der mit Stickstoff gespült wurde und auf dem ein Kühler angebracht ist, werden 17,5 Gewichtsteile Pentylacetat vorgelegt und unter Rühren auf 140°C aufgeheizt. Parallel dazu wurden zwei separate Zuläufe prepariert. Zulauf 1 bestand aus 28,58 Gewichtsteilen 2-Hydroxypropylmethacrylat, 11,93 Gewichtsteilen Cyclohexylmethacrylat, 14,44 Gewichtsteilen Ethylhexylmethacrylat, 6,88 Gewichtsteilen Ethylhexylacrylat und 0,15 Gewichtsteilen Acrylsäure. Zulauf 2 bestand aus 2,945 Gewichtsteilen Solventnaphta® und 8,06 Gewichtsteilen Peroxid TBPEH(= tert.- Butylhydroperoxid). Nachdem die Temperatur von 140°C erreicht war, wurde Zulauf 2 langsam und gleichmäßig über einen Zeitraum von 285 Minuten zudosiert. 15 Minuten nach dem Start von Zulauf 2 wurde Zulauf 1 langsam und gleichmäßig über einen Zeitraum von 240 Minuten in den Reaktor dosiert. Nach Ende der Dosierung von Zulauf 2 wurde das Reaktionsgemisch zur Nachpolymerisation noch 120 Minuten bei 140°C gerührt. Der Festkörpergehalt des so erhaltenen Produktes wurde zu 65 %, die Säurezahl zu 5-7 mg KOH / g (bezogen auf den Festkörper), die OH-Zahl zu 180 mgKOH/g und die Viskosität bei 23°C zu 19,5 dPa·s bestimmt.

### 5.5. Herstellung eines Katalysators (C2) auf Basis eines aminblockierten Phosphorsäureesters

In einem Reaktor, ausgestattet mit einem Tropftrichter und einem Rückflußkühler wurden 32,4 Gewichtsteile Phosphorsäureethylhexylester und 50 Gewichtsteile Methoxypropylacetat vorgelegt und homogenisiert. Anschließend wurden so langsam unter Kühlung und Rühren 17,6 Gewichtsteile Triethylamin zugetropft, dass die Temperatur 60°C nicht überstieg. Nach erfolgter Zugabe des Triethylamins wurde das Reaktionsgemisch noch 2 Stunden bei Raumtemperatur gerührt. Das resultierende Reaktionsprodukt wies einen Festkörpergehalt von 50,0 % auf.

### 6. Herstellung der 2-Komponenten-Klarlacke

Die in Tabelle 4 aufgeführten Rohstoffe wurden zur Herstellung des Stammlackes in den angegebenen Mengen nacheinander zusammengegeben und homogenisiert.

**Tabelle 4: Zusammensetzung der 2-Komponenten Klarlacke der Beispiele 3 bis 5 und des Vergleichsbeispiels V7**

| Inhaltsstoff [Gew.-teile] | Beispiel V7 | Beispiel 3 | Beispiel 4 | Beispiel 5 |
|---|---|---|---|---|
| Polyacrylat (PAC2) gemäß 6.4. | 73,5 | 73,5 | 73,5 | 73,5 |
| Butyldiglykolacetat | 8,5 | 8,5 | 8,5 | 8,5 |
| Butanol | 0,15 | 0,15 | 0,15 | 0,15 |
| Tinuvin 5941-R ¹⁾ | 1,86 | 1,86 | 1,86 | 1,86 |
| Tinuvin 292 ²⁾ | 0,24 | 0,24 | 0,24 | 0,24 |
| Byk® 320 ³⁾ | 0,15 | 0,15 | 0,15 | 0,15 |
| Byk® 306⁴⁾ | 0,20 | 0,20 | 0,20 | 0,20 |
| Solventnaphta® | 3 | 3 | 3 | 3 |
| Butylacetat | 3,63 | 3,63 | 3,63 | 3,63 |
| Ethoxypropylacetat | 4,77 | 4,77 | 4,77 | 4,77 |
| Butylglykolacetat | 4 | 4 | 4 | 4 |
| Katalysator (C2) gemäß 6.5. | 0 | 2 | 2 | 2 |
| Addukt (A2) gemäß 6.1. | 0 | 30 | 0 | 0 |
| Addukt (A3) gemäß 6.2. | 0 | 0 | 30 | 0 |
| Addukt (A4) gemäß 6.3. | 0 | 0 | 0 | 30 |

| | | | | |
|---|---|---|---|---|
| **Erläuterungen zu Tabelle 4:** Tinuvin® 5941 - R = handelsübliche Mischung verschiedener Lichtschutzmittel der Firma Ciba Speciality Chemicals Inc. Tinuvin® 292 = handelsübliches Lichtschutzmittel auf Basis sterisch gehinderter Amine ("HALS") der Firma Ciba Speciality Chemicals Inc. Byk® 320 = handelsübliches Verlaufsadditiv auf Basis einer 52-%igen Lösung eines polyethermodifizierten Polymethylalkylsiloxans der Firma Byk-Chemie GmbH, Wesel Byk® 306 = handelsübliches Verlaufsadditiv auf Basis einer 12,5-%igen Lösung eines polyethermodifizierten Polydimethylsiloxans in Xylol/Monophenylglykol 7/2 der Firma Byk-Chemie GmbH, Wesel | | | | |

Unmittelbar vor der Applikation wurden zu 100 Gewichtsteilen Stammlack noch 33 Gewichtsteile Härter gegeben und die so erhaltene Mischung homogenisiert. Der eingesetzte Härter wurde hergestellt, indem die in Tabelle 5 aufgeführten Bestandteile zusammengegeben und homogenisiert wurden.

**Tabelle 5:**

| Bestandteil | Gewichtsteile Härter |
|---|---|
| Basonat® HI 190 (Handelsprodukt der BASF AG) | 23 |
| Desmodur® Z 4470 (70 % in SN) | 64 |
| Butylacetat | 6,5 |
| Solventnaphta® | 6,5 |

| | |
|---|---|
| Erläuterungen zu Tabelle 5: Basonat® HI 190 = handelsüblichen Isocyanurat von Hexamethylendiisocyanat der Firma BASF AG, 90ig in einer Mischung aus Solventnaphta® und Butylacetat Desmodur® Z 4470 = handelsübliches Isocyanurat von Isophorondiisocyanat der Firma Bayer Material Science AG, 70%ig in Solventnaphta® | |

### 7. Herstellung der Beschichtungen

Die einzelnen 2 K Klarlacke wurde auf Prüfbleche appliziert, die jeweils mit einer üblichen und bekannten, kathodisch abgeschiedenen, thermisch gehärteten Elektrotauchlackierung, einer üblichen und bekannten, thermisch gehärteten Füllerlackierung und einer während 10 Minuten bei 80°C vorgetrockneten Schicht aus einem handelsüblichen, konventionellen, schwarzen Basislack der Firma BASF Coatings AG beschichtet worden waren, appliziert. Die Basislackschicht und die Klarlackschicht wurden gemeinsam während 22 Minuten bei 140°C gehärtet. Die resultierende Basislackierung wies eine Schichtdicke von 7,5 *µ*m und die Klarlackierung eine Schichtdicke von 40 *µ*m auf.

### 8. Untersuchung der Eigenschaften der resultierenden Beschichtungen

Alle Oberflächen waren hochglänzend und zeigten eine hervorragende Appearance. Auf den resultierenden Oberflächen wurde die Trockenkratzbeständigkeit mit Hilfe des Crockmeter - Tests (9 *µ*m Papierkörnung) bestimmt. Dazu wurde in Anlehnung an EN ISO 105 - X 12 verfahren und der Glanzverlust bei 20° nach 10 Doppelhüben ausgewertet.

**Tabelle 6: Testergebnisse - Crockmetertest**

| Test | Klarlack Beispiel V7 | Klarlack Beispiel 3 | Klarlack Beispiel 4 | Klarlack Beispiel 5 |
|---|---|---|---|---|
| Restglanz nach Crockmeter Test [%] | 15 % | 55 % | 60 % | 66 % |

Die Ergebnisse belegen, dass die Trockenkratzbeständigkeit der Formulierungen durch den Zusatz der Addukte (A2) bis (A4) zusammen mit dem Katalysator deutlich erhöht werden kann. Außerdem zeigen die Versuche, dass der Effekt um so stärker ausgeprägt ist, je mehr grenzflächenaktives Addukt (A) eingesetzt wird.

Die Klarlackfilme der Beispiele 4, 5 und V 7 wurden über 6000 h im sogenannten WOM-CAM 180 Q/B- Test nach VDA-Prüfblatt (E) 621 - 430 Apr 97 und/oder SAE J1960 JUN89 (im Folgenden kurz CAM 180 - Test genannt) hinsichtlich Ihrer Bewitterungsstabilität untersucht. Dabei zeigte sich, dass alle untersuchten Proben auch nach 6000 h keine Rissbildung aufwiesen. Der Glanzgrad der Beispiele 4 und 5 war nach 6000 h mit dem entsprechenden Glanzgrad der Probe des Beispiels V 7 im Rahmen der Messgenauigkeit identisch. Dies belegt die gute Bewitterungsbeständigkeit der modifizierten 2 K Klarlacke.

## Patentansprüche

1. Beschichtungsmittel, enthaltend
(i) mindestens ein Addukt (A) mit Silanfunktionalität,
(ii) mindestens einen Katalysator (C) für die Vernetzung der Silangruppen,
(iii) mindestens ein von dem Addukt (A) verschiedenes, filmbildendes Material (D) mit mindestens einer reaktiven, funktionellen Gruppe G'" und
(iv) ein oder mehrere aprotische Lösemittel (L)
**dadurch gekennzeichnet, dass** das Addukt (A) herstellbar ist durch eine Additionsreaktion von
(a) mindestens einem Silan (S1), das mindestens eine funktionelle Gruppe G' aufweist, die mit den komplementären funktionellen Gruppen G" der Verbindung (O) reaktiv ist, und das Silan (S1) zusätzlich mindestens eine hydrolysierbare Gruppe aufweist,
und
(b) mindestens einer Verbindung (O), die mindestens eine komplementäre funktionelle Gruppe G" und mindestens einen oberflächenaktiven Rest aufweist, wobei der oberflächenaktive Rest ausgewählt ist aus der Gruppe der Kohlenwasserstoff-Reste, der fluorierten Kohlenwasserstoffreste, der Fettsäurereste sowie aus der Gruppe der ggf. substituierten Siloxan-Reste;
wobei die Verbindung (O) eine um mindestens 1 mN/m geringere Oberflächenspannung als das Silan (S1) aufweist, und die Oberflächenspannung bei 23°C mittels eines Ring-Tensiometers gemessen wird.

2. Beschichtungsmittel nach Anspruch 1, **dadurch gekennzeichnet, dass** die funktionellen Gruppen G' des Silans (S1) und die funktionellen Gruppen G" der Verbindung (O) ausgewählt sind aus der Gruppe der Hydroxyl-, Epoxy-, Isocyanat-, Carbamat-, Carboxyl-, Anhydrid-, Amin-, und/oder Thiolgruppen und/oder der ethylenisch ungesättigten Doppelbindungen.

3. Beschichtungsmittel nach einem der Ansprüche 1 oder 2, **dadurch gekennzeichnet, dass** das Silan (S1) die Formel (I) aufweist
R^{s}ₙ-Si-R"ₓX₄₋₍ₙ₊ₓ₎ (I)
mit
X = identische oder unterschiedliche hydrolysierbare Gruppe,
R^{s} = organischer Rest mit mindestens einer funktionellen Gruppe G', insbesondere linearer und/oder verzweigter Alkylen- oder Cycloalkylenrest mit 1 bis 20 Kohlenstoffatomen und mit mindestens einer funktionellen Gruppe G'ganz besonders Alkylenrest mit 1 bis 4 Kohlenstoffatomen und mit mindestens einer funktionellen Gruppe G',
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl, bevorzugt R" = Alkylrest, insbesondere mit 1 bis 6 C-Atomen,
n = 1 bis 3, bevorzugt 1 bis 2, besonders bevorzugt n = 1,
x = 0 bis 2, bevorzugt 0 bis 1, besonders bevorzugt x = 0 und
1≤n + x≤3, bevorzugt 1≤n+x≤2, besonders bevorzugt n+x = 1.

4. Beschichtungsmittel nach einem der Ansprüche 1 bis 3, **dadurch gekennzeichnet, dass** das Silan (S1) die Formel (II) aufweist
R^{s}ₙ-Si-R"ₓ(OR)₄₋₍ₙ₊ₓ₎ (II)
mit
n = 1 bis 3, bevorzugt n = 1 bis 2 und besonders bevorzugt n = 1,
x = 0 bis 2, bevorzugt 0 bis 1, besonders bevorzugt x = 0,
1≤n+x≤3, bevorzugt 1≤n+x≤2, besonders bevorzugt n+x = 1,
R = Wasserstoff, Alkyl oder Cycloalkyl, mit Ra = Alkyl, Cycloalkyl, Aryl oder Aralkyl, bevorzugt R = Alkylrest, insbesondere mit 1 bis 6 C-Atomen, wobei die Kohlenstoffkette durch nicht benachbarte Sauerstoff-, Schwefel- oder NRa-Gruppen unterbrochen sein kann und R" sowie R^{s} die bei Formel (I) angegebene Bedeutung haben.

5. Beschichtungsmittel nach einem der Ansprüche 1 bis 4, **dadurch gekennzeichnet, dass** die Verbindung (O) ein Siloxan der Formel (III) ist 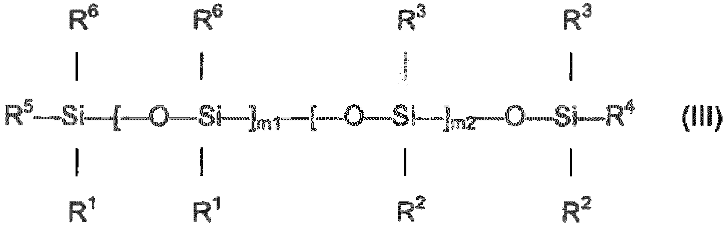 wobei
R¹ bis R⁶ gleiche oder verschiedene Reste sind und
R¹ = Alkyl-, Cycloalkyl-, Aryl- oder Aralkylrest, wobei die Kohlenstoffkette durch nicht benachbart Sauerstoff-, Schwefel- oder NRa-Gruppen unterbrochen sein kann, mit Fluor substituierte Alkyl-, Cycloalkyl-, Aryl- oder Aralkylreste, wobei Strukturen, die einen Ethylen-Rest zwischen dem Siliciumatom und dem mit Fluor substituierten organischen Rest aufweisen, bevorzugt sind,
R² = Hydroxy, Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann,
R³ und R⁶ = Wasserstoff, Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann, mit Fluor substituierte Alkyl-, Cycloalkyl-, Aryl- oder Aralkylreste, wobei Strukturen, die einen Ethylen-Rest zwischen dem Siliciumatom und dem mit Fluor substituierten organischen Rest aufweisen, bevorzugt sind,
R⁴ und R⁵ = Wasserstoff, Hydroxy, Alkyl-, Cycloalkyl-, Aryl- oder Aralkylrest, wobei die Kohlenstoffkette durch nicht benachbarte Sauerstoff-, Schwefel- oder NRa-Gruppen unterbrochen sein kann,
wobei mindestens einer der Reste R², R⁴ und R⁵ zusätzlich eine funktionelle Gruppe G" trägt, die reaktiv gegenüber der komplementären funktionellen Gruppe G' des Silans (S1) ist,
und
m₁ = 1 bis 80, bevorzugt 2 bis 20 und
m₂ = 0 bis 80, bevorzugt 0 bis 10.

6. Beschichtungsmittel nach einem der Ansprüche 1 bis 5, **dadurch gekennzeichnet, dass** die Verbindung (O) ein Siloxan der Formel (V) ist 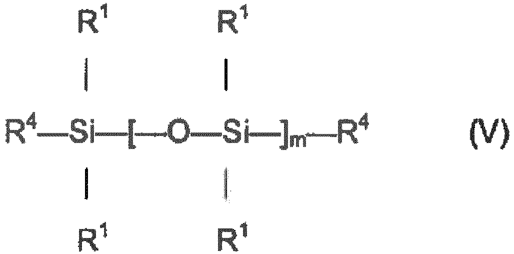 wobei
R¹ und R⁴ die vorstehend genannte Bedeutung haben und Methyl-, Ethyl- und Phenylreste sowie Alkylreste, die zum Teil mit Fluor bzw. der funktionellen Gruppe G" substituiert sind, bevorzugt sind und R¹ besonders bevorzugt ein Methylrest, und/oder die funktionelle Gruppe G" bevorzugt eine Hydroxygruppe ist,
m = 1 bis 80, bevorzugt 3 bis 20 und besonders bevorzugt 5 bis 12.

7. Beschichtungsmittel nach einem der Ansprüche 1 bis 6, **dadurch gekennzeichnet, dass** das Addukt (A) im Mittel weniger als 50 mol-% von den Alkoxysilangruppen verschiedene, freie reaktive Gruppen aufweist.

8. Beschichtungsmittel nach einem der Ansprüche 1 bis 7, **dadurch gekennzeichnet, dass** das Addukt (A) durch Umsetzung von
- mindestens einem Aminosilan der Formel (VII):
H-N-(L-SiR"x(OR')3-x)n(L'-SiR"y(OR')3-y)m (VII),
wobei
R' = Wasserstoff, Alkyl oder Cycloalkyl, wobei die Kohlenstoffkette durch nicht benachbarte Sauerstoff-, Schwefel- oder NRa-Gruppen unterbrochen sein kann, mit Ra = Alkyl, Cycloalkyl, Aryl oder Aralkyl,
L, L' = linearer und/oder verzweigter Alkylen- oder Cycloalkylenrest mit 1 bis 20 Kohlenstoffatomen,
R" = Alkyl, Cycloalkyl, Aryl, oder Aralkyl, wobei die Kohlenstoffkette durch nicht benachbarte Sauerstoff-, Schwefel- oder NRa-Gruppen unterbrochen sein kann,
n = 0 bis 2, m = 0 bis 2 und m + n = 2
sowie
x, y = 0 bis 2 sind
mit
- mindestens einem Di- und/oder Polyisocyanat (PI) und
- mindestens einer oberflächenaktiven Verbindung (O)
hergestellt worden ist.

9. Beschichtungsmittel nach Anspruch 8, **dadurch gekennzeichnet, dass** das Polyisocyanat (PI) ausgewählt ist aus der Gruppe 1,6-Hexamethylendiisocyanat, Isophorondiisocyanat, und 4,4'-Methylendicyclohexyldiisocyanat, der Biuret-Dimeren der vorgenannten Polyisocyanate und/oder der Isocyanurat-Trimeren der vorgenannten Polyisocyanate und/oder dass das Aminosilan der Formel (VII) ausgewählt ist aus der Gruppe Bis(2-ethyltrimethoxysilyl)amin, Bis(3-propyltrimethoxysilyl)amin, Bis(4-butyltrimethoxysilyl)amin, Bis(2-ethyltrimethoxysilyl)amin, Bis(3-propyltriethoxysilyl)amin und/oder Bis(4-butyltriethoxysilyl)amin, insbesondere dass das Aminosilan Bis(3-propyltrimethoxysilyl)amin ist.

10. Beschichtungsmittel nach einem der Ansprüche 1 bis 9, **dadurch gekennzeichnet, dass** die Verbindung (O) in einer Menge von 0,05 bis 50 Gew.-%, bevorzugt in einer Menge von 0,1 bis 10 Gew.-%, jeweils bezogen auf den Gehalt an eingesetztem Addukt (A) ohne Lösemittel, eingesetzt wird.

11. Beschichtungsmittel nach einem der Ansprüche 1 bis 10, **dadurch gekennzeichnet, dass** es das Addukt (A) in einer Menge von 0,1 bis 35 Gew.-%, insbesondere von 0,5 bis 15 Gew.-%, und/oder den Katalysator (C) in einer Menge von 0,1 bis 15 Gew.-%, insbesondere von 0,5 bis 5 Gew.-%, und/oder das filmbildende Material (D) in einer Menge von 50 bis 99,8 Gew.-%, insbesondere von 80 bis 99,4 Gew.-%, jeweils bezogen auf die nichtflüchtigen Bestandteile des Beschichtungsmittels, enthält.

12. Beschichtungsmittel nach einem der Ansprüche 1 bis 11, **dadurch gekennzeichnet, dass** der Katalysator (C) phosphorhaltig ist.

13. Beschichtungsmittel nach Anspruch 12, **dadurch gekennzeichnet, dass** der Katalysator (C) ausgewählt ist aus der Gruppe der substituierten Phosphonsäurediester und Diphosphonsäurediester, vorzugsweise aus der Gruppe der acyclischen Phosphonsäurediester, cyclischen Phosphonsäurediester, acyclischen Diphosphonsäurediester und cyclischen Diphosphonsäurediester, sowie der substituierten Phosphorsäuremonoester und Phosphorsäurediester, vorzugsweise aus der Gruppe, bestehend aus acyclischen Phosphorsäurediestern und cyclischen Phosphorsäurediestern, oder der entsprechenden aminblockierten Ester.

14. Beschichtungsmittel nach einem der Ansprüche 1 bis 13, **dadurch gekennzeichnet, dass** die funktionelle Gruppe G'" des filmbildenden Materials ausgewählt ist aus der Gruppe der mittels Strahlung vernetzbaren Gruppen und/oder aus der Gruppe der thermisch vernetzbaren Gruppen, insbesondere der Hydroxyl-, Carbamat-, Epoxy-, Isocyanat- und Carboxylgruppen.

15. Beschichtungsmittel nach einem der Ansprüche 1 bis 14, **dadurch gekennzeichnet, dass** es als filmbildendes Material (D) eine Mischung aus einem der mehrerer Bindemitteln (BM) und einem oder mehreren Vernetzungsmitteln (VM) enthält, wobei die Vernetzungsmittel insbesondere ausgewählt sind aus der Gruppe der Aminoplastharze, unblockierten Di- und/oder Polyisocyanate, blockierten Di- und/oder Polyisocyanate, Polyepoxide, Polycarbonsäuren, Polyanhydride und der Polyole.

16. Effekt- und/oder farbgebende Mehrschichtlackierung aus mindestens einer pigmentierten Beschichtung und einer darauf angeordneten transparenten Beschichtung, **dadurch gekennzeichnet, dass** die transparente Beschichtung aus einem Beschichtungsmittel nach einem der Ansprüche 1 bis 15 hergestellt worden ist.

17. Mehrschichtlackierung nach Anspruch 16, **dadurch gekennzeichnet, dass** die transparente Beschichtung im ausgehärteten Zustand eine Mikroeindringhärte von mindestens 90 N/mm², insbesondere von mindestens 100 N/mm² und ganz besonders bevorzugt von mindestens 110 N/mm² aufweist, wobei Mikroeindringhärte durch die in der Beschreibung angegebene Methode bestimmt wird.

18. Verfahren zur Herstellung der Mehrschichtlackierung nach Anspruch 16 oder 17, bei dem auf ein ggf. vorbeschichtetes Substrat mindestens ein pigmentiertes Beschichtungsmittel und auf mindestens einen Teil der so erhaltenen pigmentierten Beschichtung mindestens ein transparentes Beschichtungsmittel aufgebracht und gehärtet wird.

19. Verfahren nach Anspruch 18, **dadurch gekennzeichnet, dass** es in der Automobilserien- und/oder Nutzfahrzeug- und/oder Reparaturlackierung, zur Beschichtung von Karosserie-Innen oder-Außenbauteilen oder von Bauteilen für den Schiff- und Flugzeugbau oder von Bauteilen für Haushalts- und Elektrogeräte oder von Kunststoffformteilen oder Folien eingesetzt wird.

20. Verfahren zur Verbesserung der Härte und/oder der Kratzfestigkeit einer Beschichtung, **dadurch gekennzeichnet, dass** den zur Herstellung der zu verbessernden Beschichtung verwendeten Beschichtungsmitteln eine Mischung aus einem Addukt (A) mit Silanfunktionalität und einem Katalysator (C) für die Vernetzung der Silangruppen zugesetzt wird, wobei das Addukt (A) herstellbar ist durch eine Additionsreaktion von
(a) mindestens einem Silan (S1), das mindestens eine funktionelle Gruppe G' aufweist, die mit den komplementären funktionellen Gruppen G" der Verbindung (O) reaktiv ist, und das Silan (S1) zusätzlich mindestens eine hydrolysierbare Gruppe aufweist,
und
(b) mindestens einer Verbindung (O), die mindestens eine komplementäre funktionelle Gruppe G" und mindestens einen oberflächenaktiven Rest aufweist, wobei der oberflächenaktive Rest ausgewählt ist aus der Gruppe der Kohlenwasserstoff-Reste, der fluorierten Kohlenwasserstoffreste, der Fettsäurereste sowie aus der Gruppe der ggf. substituierten Siloxan-Reste;
wobei die Verbindung (O) eine um mindestens 1 mN/m geringere Oberflächenspannung als das Silan (S1) aufweist, und die Oberflächenspannung bei 23°C mittels eines Ring-Tensiometers gemessen wird.

## Claims

1. Coating composition comprising
(i) at least one adduct (A) with silane functionality,
(ii) at least one catalyst (C) for the crosslinking of the silane groups,
(iii) at least one film-forming material (D) different from the adduct (A) and having at least one reactive functional group G"', and
(iv) one or more aprotic solvents (L), **characterized in that** the adduct (A) is preparable by an addition reaction of
(a) at least one silane (S1) which has at least one functional group G' which is reactive with the complementary functional groups G" of the compound (O), and the silane (S1) additionally has at least one hydrolyzable group,
and
(b) at least one compound (O) which has at least one complementary functional group G" and at least one surface-active radical,
wherein the surface-active radical is selected from the group consisting of hydrocarbon radicals, fluorinated hydrocarbon radicals, fatty acid radicals, and also from the group consisting of unsubstituted or substituted siloxane radicals;
wherein the compound (O) has a lower surface tension by at least 1 mN/m than the silane (S1), and the surface tension is measured at 23°C by means of a ring tensiometer.

2. Coating composition according to Claim 1, **characterized in that** the functional groups G' of the silane (S1) and the functional groups G" of the compound (O) are selected from the group consisting of hydroxyl, epoxy, isocyanate, carbamate, carboxyl, anhydride, amine and/or thiol groups and/or ethylenically unsaturated double bonds.

3. Coating composition according to either of Claims 1 and 2, **characterized in that** the silane (S1) has the formula (I)
R^{S}ₙ-Si-R"ₓX₄₋₍ₙ₊ₓ₎ (I)
where
X = identical or different hydrolyzable group,
R^{S} = organic radical having at least one functional group G', more particularly linear and/or branched alkylene or cycloalkylene radical having 1 to 20 carbon atoms and having at least one functional group G', especially alkylene radical having 1 to 4 carbon atoms and having at least one functional group G',
R" = alkyl, cycloalkyl, aryl, or aralkyl, it being possible for the carbon chain to be interrupted by nonadjacent oxygen, sulfur or NRa groups, with Ra = alkyl, cycloalkyl, aryl or aralkyl, preferably R" = alkyl radical, more particularly having 1 to 6 C atoms,
n = 1 to 3, preferably 1 to 2, more preferably n = 1,
x = 0 to 2, preferably 0 to 1, more preferably x = 0,
1 ≤ n + x ≤ 3, preferably 1 ≤ n + x ≤ 2, more preferably n + x = 1.

4. Coating composition according to any one of Claims 1 to 3, **characterized in that** the silane (S1) has the formula (II)
R^{S}ₙ-Si-R"ₓ(OR)₄₋₍ₙ₊ₓ₎ (II)
where
n = 1 to 3, preferably n = 1 to 2, more preferably n = 1,
x = 0 to 2, preferably 0 to 1, more preferably x = 0,
1 ≤ n + x ≤ 3, preferably 1 ≤ n + x ≤ 2, more preferably n + x = 1,
R = hydrogen, alkyl or cycloalkyl, with Ra = alkyl, cycloalkyl, aryl or aralkyl, preferably R = alkyl radical, more particularly having 1 to 6 C atoms, it being possible for the carbon chain to be interrupted by nonadjacent oxygen, sulfur or NRa groups, and R" and also R^{S} are as defined for formula (I).

5. Coating composition according to any one of Claims 1 to 4, **characterized in that** the compound (O) is a siloxane of the formula (III) 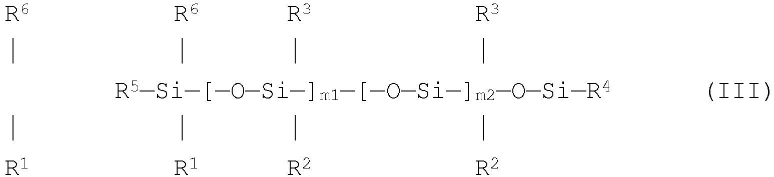 where
R¹ to R⁶ are identical or different radicals and
R¹ = alkyl, cycloalkyl, aryl or aralkyl radical, the carbon chain possibly being interrupted by nonadjacent oxygen, sulfur or NRa groups, or fluorine-substituted alkyl, cycloalkyl, aryl or aralkyl radicals, preference being given to structures which have an ethylene radical between the silicon atom and the fluorine-substituted organic radical,
R² = hydroxyl, alkyl, cycloalkyl, aryl or aralkyl radical, the carbon chain possibly being interrupted by nonadjacent oxygen, sulfur or NRa groups,
R³ and R⁶ = hydrogen, alkyl, cycloalkyl, aryl or aralkyl radical, the carbon chain possibly being interrupted by nonadjacent oxygen, sulfur or NRa groups, or fluorine-substituted alkyl, cycloalkyl, aryl or aralkyl radicals, preference being given to structures which have an ethylene radical between the silicon atom and the fluorine-substituted organic radical,
R⁴ and R⁵ = hydrogen, hydroxyl, alkyl, cycloalkyl, aryl or aralkyl radical, the carbon chain possibly being interrupted by nonadjacent oxygen, sulfur or NRa groups,
at least one of the radicals R² , R⁴, and R⁵ additionally carrying a functional group G" which is reactive toward the complementary functional group G' of the silane (S1),
and
m₁ = 1 to 80, preferably 2 to 20, and
m₂ = 0 to 80, preferably 0 to 10.

6. Coating composition according to any one of Claims 1 to 5, **characterized in that** the compound (O) is a siloxane of the formula (V) 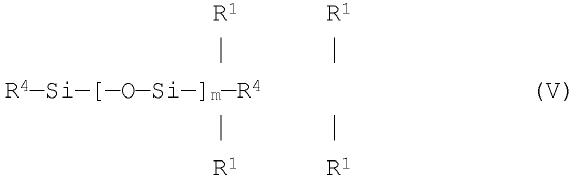 where
R¹ and R⁴ are as defined above and preference is given to methyl, ethyl, and phenyl radicals and also to alkyl radicals partly substituted by fluorine and/or the functional group G", and R¹ more preferably is a methyl radical, and/or the functional group G" is preferably a hydroxyl group,
m = 1 to 80, preferably 3 to 20, and more preferably 5 to 12.

7. Coating composition according to any one of Claims 1 to 6, **characterized in that** the adduct (A) contains on average less than 50 mol% of free reactive groups different from the alkoxysilane groups.

8. Coating composition according to any one of Claims 1 to 7, **characterized in that** the adduct (A) has been prepared by reacting
- at least one aminosilane of the formula (VII):
H-N-(L-SiR"x(OR')3-x)n(L'-SiR"y(OR')3-y)m (VII)
where
R' = hydrogen, alkyl or cycloalkyl, it being possible for the carbon chain to be interrupted by nonadjacent oxygen, sulfur or NRa groups with Ra = alkyl, cycloalkyl, aryl or aralkyl,
L, L' = linear and/or branched alkylene or cycloalkylene radical having 1 to 20 carbon atoms,
R" = alkyl, cycloalkyl, aryl, or aralkyl, it being possible for the carbon chain to be interrupted by nonadjacent oxygen, sulfur or NRa groups,
n = 0 to 2, m = 0 to 2, and m + n = 2,
and
x, y = 0 to 2
with
- at least one diisocyanate and/or polyisocyanate (PI) and
- at least one surface-active compound (O).

9. Coating composition according to Claim 8, **characterized in that** the polyisocyanate (PI) is selected from the group consisting of 1,6-hexamethylene diisocyanate, isophorone diisocyanate, and 4,4'-methylenedicyclohexyl diisocyanate, the biuret dimers of the aforementioned polyisocyanates and/or the isocyanurate trimers of the aforementioned polyisocyanates, and/or **in that** the aminosilane of the formula (VII) is selected from the group consisting of bis(2-ethyltrimethoxysilyl)amine, bis(3-propyltrimethoxysilyl)amine, bis(4-butyltrimethoxysilyl)amine, bis(2-ethyltrimethoxysilyl)amine, bis(3-propyltriethoxysilyl)amine and/or bis(4-butyltriethoxysilyl)amine, more particularly **in that** the aminosilane is bis(3-propyltrimethoxysilyl) amine.

10. Coating composition according to any one of Claims 1 to 9, **characterized in that** the compound (O) is used in an amount of 0.05% to 50% by weight, preferably in an amount of 0.1% to 10% by weight, based in each case on the amount of adduct (A) used, without solvent.

11. Coating composition according to any one of Claims 1 to 10, **characterized in that** it comprises the adduct (A) in an amount of 0.1% to 35% by weight, more particularly of 0.5% to 15% by weight, and/or the catalyst (C) in an amount of 0.1% to 15% by weight, more particularly of 0.5% to 5% by weight, and/or the film-forming material (D) in an amount of 50% to 99.8% by weight, more particularly of 80% to 99.4% by weight, based in each case on the nonvolatiles of the coating composition.

12. Coating composition according to any one of Claims 1 to 11, **characterized in that** the catalyst (C) is phosphorus-containing.

13. Coating composition according to Claim 12, **characterized in that** the catalyst (C) is selected from the group consisting of substituted phosphonic diesters and diphosphonic diesters, preferably from the group consisting of acyclic phosphonic diesters, cyclic phosphonic diesters, acyclic diphosphonic diesters, and cyclic diphosphonic diesters, and also of substituted phosphoric monoesters and phosphoric diesters, preferably from the group consisting of acyclic phosphoric diesters and cyclic phosphoric diesters, or of the corresponding amine-blocked esters.

14. Coating composition according to any one of Claims 1 to 13, **characterized in that** the functional group G'" of the film-forming material is selected from the group consisting of radiation-crosslinkable groups and/or from the group consisting of thermally crosslinkable groups, more particularly of hydroxyl, carbamate, epoxy, isocyanate, and carboxyl groups.

15. Coating composition according to any one of Claims 1 to 14, **characterized in that** it comprises as film-forming material (D) a mixture of one or more binders (BM) and one or more crosslinking agents (VM), the crosslinking agents being selected more particularly from the group consisting of amino resins, nonblocked di- and/or polyisocyanates, blocked di- and/or polyisocyanates, polyepoxides, polycarboxylic acids, polyanhydrides, and polyols.

16. Multicoat effect and/or color paint system comprising at least one pigmented coating and, disposed thereon, a transparent coating, **characterized in that** the transparent coating has been prepared from a coating composition according to any one of Claims 1 to 15.

17. Multicoat paint system according to Claim 16, **characterized in that** the transparent coating in the cured state has a micropenetration hardness of at least 90 N/mm², more particularly of at least 100 N/mm², and very preferably of at least 110 N/mm², where micropenetration hardness is determined by the methods stated in the description.

18. Process for producing the multicoat paint system according to Claim 16 or 17, wherein an unprecoated or precoated substrate is coated with at least one pigmented coating composition and at least part of the resulting pigmented coating is coated with at least one transparent coating composition, and curing is carried out.

19. Process according to claim 18, **characterized in that** it is employed in automotive OEM finishing and/or commercial vehicle finishing and/or refinish, for the coating of interior or exterior bodywork components or of components for shipbuilding and aircraft construction or of components for household appliances and electrical appliances or of plastics moldings or films.

20. Method of improving the hardness and/or the scratch resistance of a coating, **characterized in that** it comprises adding, to the coating compositions used to produce the coating that is to be improved, a mixture of an adduct (A) with silane functionality and a catalyst (C) for the crosslinking of the silane groups, the adduct (A) being preparable by an addition reaction of
(a) at least one silane (S1) which has at least one functional group G' which is reactive with the complementary functional groups G" of the compound (O), and the silane (S1) additionally has at least one hydrolyzable group,
and
(b) at least one compound (O) which has at least one complementary functional group G" and at least one surface-active radical, wherein the surface-active radical is selected from the group consisting of hydrocarbon radicals, fluorinated hydrocarbon radicals, fatty acids radicals, and also from the group consisting of unsubstituted or substituted siloxane radicals;
wherein the compound (O) has a lower surface tension by at least 1 mN/m than the silane S1, and the surface tension is measured at 23°C by means of a ring tensionmeter.

## Revendications

1. Agent de revêtement, contenant :
(i) au moins un adduit (A) contenant une fonctionnalité silane,
(ii) au moins un catalyseur (C) pour la réticulation des groupes silane,
(iii) au moins un matériau filmogène (D), différent de l'adduit (A), contenant au moins un groupe fonctionnel réactif G"', et
(iv) un ou plusieurs solvants aprotiques (L), **caractérisé en ce que** l'adduit (A) peut être fabriqué par une réaction d'addition de :
(a) au moins un silane (S1), qui comprend au moins un groupe fonctionnel G', qui est réactif avec les groupes fonctionnels complémentaires G" du composé (O), le silane (S1) comprenant en outre au moins un groupe hydrolysable,
et
(b) au moins un composé (O), qui comprend au moins un groupe fonctionnel complémentaire G" et au moins un radical tensioactif, le radical tensioactif étant choisi dans le groupe constitué par les radicaux hydrocarbonés, les radicaux hydrocarbonés fluorés, les radicaux acides gras, ainsi que dans le groupe constitué par les radicaux siloxane éventuellement substitués ;
le composé (O) présentant une tension de surface inférieure d'au moins 1 mN/m par rapport au silane (S1), la tension de surface étant déterminée à 23 °C au moyen d'un tensiomètre à anneau.

2. Agent de revêtement selon la revendication 1, **caractérisé en ce que** les groupes fonctionnels G' du silane (S1) et les groupes fonctionnels G" du composé (O) sont choisis dans le groupe constitué par les groupes hydroxyle, époxy, isocyanate, carbamate, carboxyle, anhydride, amine et/ou thiol, et/ou les doubles liaisons éthyléniquement insaturées.

3. Agent de revêtement selon l'une quelconque des revendications 1 ou 2, **caractérisé en ce que** le silane (S1) présente la formule (I) :
R^{S}ₙ-Si-R"ₓX₄₋₍ₙ₊ₓ₎ (I)
avec
les X = groupes hydrolysables identiques ou différents, R^{S} = radical organique contenant au moins un groupe fonctionnel G', notamment un radical alkylène ou cycloalkylène linéaire et/ou ramifié de 1 à 20 atomes de carbone, et contenant au moins un groupe fonctionnel G', tout particulièrement un radical alkylène de 1 à 4 atomes de carbone, et contenant au moins un groupe fonctionnel G',
R" = alkyle, cycloalkyle, aryle ou aralkyle, la chaîne carbonée pouvant être interrompue par des groupes oxygène, soufre ou NRa non voisins, avec Ra = alkyle, cycloalkyle, aryle ou aralkyle, de préférence R" = radical alkyle, notamment de 1 à 6 atomes C,
n = 1 à 3, de préférence 1 à 2, de manière particulièrement préférée n = 1,
x = 0 à 2, de préférence 0 à 1, de manière particulièrement préférée x = 0, et
1 ≤ n+x ≤ 3, de préférence 1 ≤ n+x ≤ 2, de manière particulièrement préférée n+x = 1.

4. Agent de revêtement selon l'une quelconque des revendications 1 à 3, **caractérisé en ce que** le silane (S1) présente la formule (II) :
R^{S}ₙ-Si-R"ₓ(OR)₄₋₍ₙ₊ₓ₎ (II)
avec
n = 1 à 3, de préférence n = 1 à 2 et de manière particulièrement préférée n = 1,
x = 0 à 2, de préférence 0 à 1, de manière particulièrement préférée x = 0,
1 ≤ n+x ≤ 3, de préférence 1 ≤ n+x ≤ 2, de manière particulièrement préférée n+x = 1,
R = hydrogène, alkyle ou cycloalkyle, avec Ra = alkyle, cycloalkyle, aryle ou aralkyle, de préférence R = radical alkyle, notamment de 1 à 6 atomes C, la chaîne carbonée pouvant être interrompue par des groupes oxygène, soufre ou NRa non voisins, et R" et R^{S} ayant la signification indiquée pour la formule (I).

5. Agent de revêtement selon l'une quelconque des revendications 1 à 4, **caractérisé en ce que** le composé (O) est un siloxane de formule (III) : 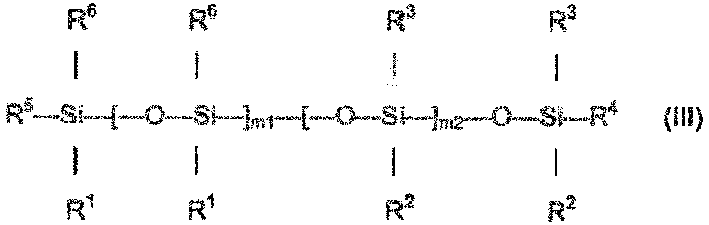 dans laquelle
R¹ à R⁶ sont des radicaux identiques ou différents, et R¹ = radical alkyle, cycloalkyle, aryle ou aralkyle, la chaîne carbonée pouvant être interrompue par des groupes oxygène, soufre ou NRa non voisins, radicaux alkyle, cycloalkyle, aryle ou aralkyle substitués avec du fluor, les structures qui comprennent un radical éthylène entre l'atome de silicium et le radical organique substitué avec du fluor étant préférées,
R² = hydroxy, radical alkyle, cycloalkyle, aryle ou aralkyle, la chaîne carbonée pouvant être interrompue par des groupes oxygène, soufre ou NRa non voisins,
R³ et R⁶ = hydrogène, radical alkyle, cycloalkyle, aryle ou aralkyle, la chaîne carbonée pouvant être interrompue par des groupes oxygène, soufre ou NRa non voisins, radicaux alkyle, cycloalkyle, aryle ou aralkyle substitués par du fluor, les structures qui comprennent un radical éthylène entre l'atome de silicium et le radical organique substitué avec du fluor étant préférées,
R⁴ et R⁵ = hydrogène, hydroxy, radical alkyle, cycloalkyle, aryle ou aralkyle, la chaîne carbonée pouvant être interrompue par des groupes oxygène, soufre ou NRa non voisins,
au moins un des radicaux R², R⁴ et R⁵ portant en outre un groupe fonctionnel G", qui est réactif vis-à-vis du groupe fonctionnel complémentaire G' du silane (S1),
et
m₁ = 1 à 80, de préférence 2 à 20, et
m₂ = 0 à 80, de préférence 0 à 10.

6. Agent de revêtement selon l'une quelconque des revendications 1 à 5, **caractérisé en ce que** le composé (O) est un siloxane de formule (V) : 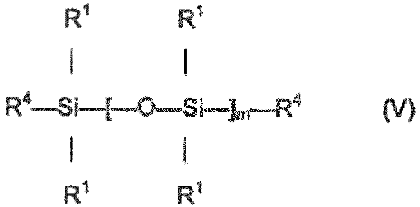 dans laquelle
R¹ et R⁴ ont la signification indiquée précédemment, et sont de préférence des radicaux méthyle, éthyle et phényle, ainsi que des radicaux alkyle qui sont en partie substitués avec du fluor ou le groupe fonctionnel G", et R¹ est de manière particulièrement préférée un radical méthyle, et/ou le groupe fonctionnel G", de préférence un groupe hydroxy,
m = 1 à 80, de préférence 3 à 20, et de manière particulièrement préférée 5 à 12.

7. Agent de revêtement selon l'une quelconque des revendications 1 à 6, **caractérisé en ce que** l'adduit (A) comprend en moyenne moins de 50 % en moles de groupes réactifs libres différents des groupes alcoxysilane.

8. Agent de revêtement selon l'une quelconque des revendications 1 à 7, **caractérisé en ce que** l'adduit (A) a été fabriqué par mise en réaction de :
- au moins un aminosilane de formule (VII) :
H-N-(L-SiR"x(OR')3-x)n(L'-SiR"y(OR')3-y)m (VII)
dans laquelle
R' = hydrogène, alkyle ou cycloalkyle, la chaîne carbonée pouvant être interrompue par des groupes oxygène, soufre ou NRa non voisins, avec Ra = alkyle, cycloalkyle, aryle ou aralkyle,
L, L' = radical alkylène ou cycloalkylène linéaire et/ou ramifié de 1 à 20 atomes de carbone,
R" = alkyle, cycloalkyle, aryle ou aralkyle, la chaîne carbonée pouvant être interrompue par des groupes oxygène, soufre ou NRa non voisins,
n = 0 à 2, m = 0 à 2 et m+n = 2,
et
x, y = 0 à 2,
avec
- au moins un di- et/ou polyisocyanate (PI) et
- au moins un composé tensioactif (O).

9. Agent de revêtement selon la revendication 8, **caractérisé en ce que** le polyisocyanate (PI) est choisi dans le groupe constitué par le diisocyanate de 1,6-hexaméthylène, le diisocyanate d'isophorone et le diisocyanate de 4,4'-dicyclohexylméthylène, les dimères de biuret des polyisocyanates susmentionnés et/ou les trimères d'isocyanurate des polyisocyanates susmentionnés, et/ou **en ce que** l'aminosilane de formule (VII) est choisi dans le groupe constitué par la bis(2-éthyltriméthoxysilyl)amine, la bis(3-propyltriméthoxysilyl)amine, la bis(4-butyltriméthoxysilyl)amine, la bis(2-éthyltriméthoxysilyl)amine, la bis(3-propyltriéthoxysilyl)amine et/ou la bis(4-butyltriéthoxysilyl)amine, notamment **en ce que** l'aminosilane est la bis(3-propyltriméthoxysilyl)amine.

10. Agent de revêtement selon l'une quelconque des revendications 1 à 9, **caractérisé en ce que** le composé (O) est utilisé en une quantité de 0,05 à 50 % en poids, de préférence en une quantité de 0,1 à 10 % en poids, à chaque fois par rapport à la teneur en adduit (A) utilisé sans solvant.

11. Agent de revêtement selon l'une quelconque des revendications 1 à 10, **caractérisé en ce qu'**il contient l'adduit (A) en une quantité de 0,1 à 35 % en poids, notamment de 0,5 à 15 % en poids, et/ou le catalyseur (C) en une quantité de 0,1 à 15 % en poids, notamment de 0,5 à 5 % en poids, et/ou le matériau filmogène (D) en une quantité de 50 à 99,8 % en poids, notamment de 80 à 99,4 % en poids, à chaque fois par rapport aux constituants non volatils de l'agent de revêtement.

12. Agent de revêtement selon l'une quelconque des revendications 1 à 11, **caractérisé en ce que** le catalyseur (C) contient du phosphore.

13. Agent de revêtement selon la revendication 12, **caractérisé en ce que** le catalyseur (C) est choisi dans le groupe constitué par les diesters de l'acide phosphonique et les diesters de l'acide diphosphonique substitués, de préférence dans le groupe constitué par les diesters de l'acide phosphonique acycliques, les diesters de l'acide phosphonique cycliques, les diesters de l'acide diphosphonique acycliques et les diesters de l'acide diphosphonique cycliques, ainsi que les monoesters de l'acide phosphorique et les diesters de l'acide phosphorique substitués, de préférence dans le groupe constitué par les diesters de l'acide phosphorique acycliques et les diesters de l'acide phosphorique cycliques, ou les esters aminobloqués correspondants.

14. Agent de revêtement selon l'une quelconque des revendications 1 à 13, **caractérisé en ce que** le groupe fonctionnel G'" du matériau filmogène est choisi dans le groupe constitué par les groupes réticulables par rayonnement et/ou dans le groupe constitué par les groupes réticulables thermiquement, notamment les groupes hydroxyle, carbamate, époxy, isocyanate et carboxyle.

15. Agent de revêtement selon l'une quelconque des revendications 1 à 14, **caractérisé en ce qu'**il contient en tant que matériau filmogène (D) un mélange d'un ou de plusieurs liants (BM) et d'un ou de plusieurs agents de réticulation (VM), les agents de réticulation étant notamment choisis dans le groupe constitué par les résines aminoplastes, les di- et/ou polyisocyanates non bloqués, les di- et/ou polyisocyanates bloqués, les polyépoxydes, les acides polycarboxyliques, les polyanhydrides et les polyols.

16. Vernissage multicouche à effet et/ou colorant constitué par au moins un revêtement pigmenté et un revêtement transparent agencé sur celui-ci, **caractérisé en ce que** le revêtement transparent a été fabriqué à partir d'un agent de revêtement selon l'une quelconque des revendications 1 à 15.

17. Vernissage multicouche selon la revendication 16, **caractérisé en ce que** le revêtement transparent présente à l'état durci une dureté à la micropénétration d'au moins 90 N/mm², notamment d'au moins 100 N/mm² et de manière tout particulièrement préférée d'au moins 110 N/mm², la dureté à la micropénétration étant déterminée par la méthode indiquée dans la description.

18. Procédé de fabrication du vernissage multicouche selon la revendication 16 ou 17, selon lequel, sur un substrat éventuellement pré-revêtu, au moins un agent de revêtement pigmenté et, sur au moins une partie du revêtement pigmenté ainsi obtenu, au moins un agent de revêtement transparent sont appliqués et durcis.

19. Procédé selon la revendication 18, **caractérisé en ce qu'**il est utilisé dans le vernissage en série d'automobiles et/ou de véhicules utilitaires et/ou de réparation, pour le revêtement de composants intérieurs ou extérieurs de carrosseries ou de composants pour la construction de navires et d'aéronefs ou de composants pour appareils ménagers et électriques, ou de pièces moulées ou de films en matière plastique.

20. Procédé d'amélioration de la dureté et/ou de la résistance aux éraflures d'un revêtement, **caractérisé en ce qu'**un mélange d'un adduit (A) contenant une fonctionnalité silane et d'un catalyseur (C) pour la réticulation des groupes silane est ajouté aux agents de revêtement utilisés pour la fabrication du revêtement à améliorer, l'adduit (A) pouvant être fabriqué par une réaction d'addition de :
(a) au moins un silane (S1), qui comprend au moins un groupe fonctionnel G', qui est réactif avec les groupes fonctionnels complémentaires G" du composé (O), le silane (S1) comprenant en outre au moins un groupe hydrolysable,
et
(b) au moins un composé (O), qui comprend au moins un groupe fonctionnel complémentaire G" et au moins un radical tensioactif, le radical tensioactif étant choisi dans le groupe constitué par les radicaux hydrocarbonés, les radicaux hydrocarbonés fluorés, les radicaux acides gras, ainsi que dans le groupe constitué par les radicaux siloxane éventuellement substitués ;
le composé (O) présentant une tension de surface inférieure d'au moins 1 mN/m par rapport au silane (S1), la tension de surface étant déterminée à 23 °C au moyen d'un tensiomètre à anneau.
